# EUROPÄISCHE PATENTSCHRIFT

(11) **EP 2 054 782 B1**
(45) Veröffentlichungstag und Bekanntmachung des Hinweises auf die Patenterteilung: **21.11.2018**
(21) Anmeldenummer: 07787239.8
(22) Anmeldetag: 09.07.2007
(51) Int. Cl.: G05B 19/042

(54) **DATENAUFNAHMEVORRICHTUNG**
DATA RECORDING APPARATUS
DISPOSITIF D'ENREGISTREMENT DE DONNÉES

(43) Veröffentlichungstag der Anmeldung: 06.05.2009
(73) Patentinhaber: ABB Research Ltd, 8050 Zürich (CH)
(72) Erfinder: DECK, Bernhard, 79809 Weilheim (DE); GULLI, Lorenzo, FI-02230 Espoo (FI); VOGT, Werner, 40468 Düsseldorf (DE)
(74) Vertreter: ABB Patent Attorneys
(86) Internationale Anmeldenummer: PCT/EP2007/056963
(87) Internationale Veröffentlichungsnummer: WO 2009/006937

(56) Entgegenhaltungen:
- EP-A- 1 621 944
- EP-A- 1 698 952
- WO-A-2006/016845
- US-A1- 2003 212 530
- US-A1- 2004 167 672
- US-A1- 2006 000 849

## Beschreibung

### TECHNISCHES GEBIET

Die vorliegende Erfindung betrifft allgemein ein Verfahren zum Übertragen von Produktions- und Produktdaten einer intelligenten elektronischen Einrichtung zu einer entfernten Speichereinrichtung bzw. einem entfernten Speichersystem gemäss dem Oberbegriff von Anspruch 1. Weiter betrifft die vorliegende Erfindung eine Datenaufnahmevorrichtung gemäss dem Oberbegriff von Anspruch 17.

### STAND DER TECHNIK

Elektrische Einrichtungen - auch als primäre Einrichtungen bezeichnet - der Mittel- und Hochspannungstechnik wie beispielsweise Leistungstransformatoren, Umrichterstationen, Leitungseinrichtungen, Leistungsschalter, Trennungsschalter, Erdungsschalter, Sammelschienen, Motoren, Generatoren etc. sind üblicherweise nach Herstellung und Vertrieb an den Endnutzer an unterschiedlichen Orten vorhanden und müssen dort überwacht und durch Schutzeinrichtungen geschützt werden. Derartige Schutzeinrichtungen, die auch als sekundäre Einrichtungen oder intelligente elektronische Einrichtungen (IED, intelligent electronic device) bezeichnet werden, weisen zahlreiche elektronische Komponenten auf. Diese elektronischen Komponenten der intelligenten elektronischen Einrichtungen (IED) dienen dazu, spezielle Eigenschaften der elektrischen Einrichtung - der primären Einrichtung - zu überwachen und anzusteuern. Je nachdem was für eine primäre Einrichtung zu überwachen und/oder anzusteuern ist, wird die intelligente elektronische Einrichtung (IED) mit den dafür notwendigen elektronischen Komponenten beziehungsweise Elementen bestückt. Derartige Komponenten können beispielsweise analoge Eingabeeinheiten, Sensoreinheiten, I/O-Schnittstelleneinheiten, Energieversorgungseinheiten und Prozessoreinheiten sein.

Während der Lebensdauer (Betriebszeit) der intelligenten elektronischen Einrichtung werden oftmals Änderungen an den intelligenten elektronischen Einrichtung beziehungsweise deren Komponenten vorgenommen, insbesondere werden Komponenten der intelligenten elektronischen Einrichtung durch neue oder andersartige Komponenten ausgetauscht und/oder die Software zur Steuerung der intelligenten elektronischen Einrichtung aktualisiert. Dies wird im Folgenden als eine Änderung der Konfiguration bezeichnet. Derartige Änderungen werden oftmals vom Endnutzer der intelligenten elektronischen Einrichtung oder einem von ihm Beauftragten durchgeführt. Dies hat zur Folge, dass eine aktuelle Konfiguration der intelligenten elektronischen Einrichtung (IED), gekennzeichnet durch Produktions- und Produktdaten, nicht in allen Fällen demjenigen bekannt ist, der bei einem Fehler der intelligenten elektronischen Einrichtung um Hilfe gebeten wird, insbesondere nicht dem Hersteller der intelligenten elektronischen Einrichtung. Produktions- und Produktdaten der intelligenten elektronischen Einrichtung (IED) sind insbesondere: Seriennummer, Herstellungsland, Hardware-Versionsnummer, Software- und/oder Firmware-Versionsnummer, verwendete Testdaten, Gesamtlaufzeit, Standort Prozessorseriennummer und/oder MAC-Adresse. Die MAC-Adresse (Media Access Control), welche auch als Hardware-Adresse bezeichnet wird, ermöglicht eine eindeutige Identifikation eines Netzwerkadapters in einem Netzwerk.

In unzweckmäßiger Weise ist es ferner möglich, dass die installierten intelligenten elektronischen Einrichtungen ihren Installationsort wechseln, derart, dass dem Hersteller ein Überblick über die Installationsorte und zugehörigen Konfigurationen der zu überwachenden intelligenten elektronischen Einrichtungen nicht mehr möglich ist.

In vielen Fällen ist es daher wünschenswert, dass eine installierte intelligente elektronische Einrichtung hinsichtlich Aufstellungsort und Änderung von deren Konfiguration vom Hersteller nachverfolgt wird.

Dokument WO 2006 016845 offenbart ein System zur Verwaltung einer Klimaanlage, das Daten zu einer entfernten Speichereinrichtung
übertragt. Das Dokument eignet sich für den Gebäudeservice und nicht für Schaltanlagen der Mittel- und Hochspannungstechnik.

Bei einer Installation intelligenter elektronischer Einrichtungen in industriellen Umgebungen, insbesondere in Mittelspannungs-Schaltstationen und Hochspannungs-Schaltstationen, besteht das Problem, dass Änderungen in Anforderungen, angebrachten Teilen und Konfigurationen teilweise kontinuierlich erfolgen, so dass es sehr schwierig und fehleranfällig ist, derartige Änderungen über einen langen Zeitraum weiter zu verfolgen, insbesondere über die gesamte Lebensdauer.

Weiter unterliegt eine Kommunikation innerhalb oder aus einer bestehenden Mittelspannungs-Schaltanlage oder Hochspannungs-Schaltanlage heraus strengen Sicherheitsvorschriften, da die Betriebssicherheit der Schaltanlage nicht gefährdet werden darf.

### DARSTELLUNG DER ERFINDUNG

Eine exakte Kenntnis des gegenwärtigen Status bzw. der gegenwärtigen Konfiguration in Bezug auf Produktions- und Produktdaten einer bestimmten Installation einer intelligenten elektronischen Einrichtung (IED) zur Überwachung und/oder Ansteuerung einer primären Einrichtung der Mittel- und Hochspannungstechnik ist daher wesentlich für die Überwachung und/oder die Wartung der intelligenten elektronischen Einrichtung, nachdem sie hergestellt und vertrieben worden ist. Insbesondere für den Hersteller der intelligenten elektronischen Einrichtung, der bei einer Störung beziehungsweise bei einem Fehler der intelligenten elektronischen Einrichtung um Hilfe angefragt wird, ist es wichtig zu wissen, wo der Standort einer entsprechenden intelligenten elektronischen Einrichtung ist und wie diese intelligente elektronische Einrichtung konfiguriert ist, damit er die notwendigen Handlungen zur Behebung der Störung beziehungsweise des Fehlers unmittelbar einleiten kann ohne die intelligente elektronische Einrichtung zuvor zu inspizieren.

Intelligente elektronische Einrichtungen (IED) werden insbesondere in Mittelspannungs-Schaltanlagen und Hochspannungs-Schaltanlagen zur Ansteuerung und/oder Überwachen primärer Einrichtungen dieser Schaltanlagen eingesetzt. Für die Energieversorgung ist es daher äusserst wichtig, dass sowohl die primären Einrichtungen wie Leistungstransformatoren, Umrichterstationen, Leistungseinrichtungen, Leistungsschalter, Trennschalter, Erdungsschalter, Sammelschienen etc. als auch die diese primären Einrichtungen überwachenden und / oder ansteuernden intelligenten elektronischen Einrichtungen (sekundäre Einrichtungen) äussert zuverlässig arbeiten. Bei einer Störung und / oder Fehler der intelligenten elektronischen Einrichtung (IED) ist eine sofortige Behebung dieser Störung beziehungsweise des Fehlers erforderlich, da ansonsten die Energieversorgung zusammenbrechen könnte.

Es ist daher eine Aufgabe der vorliegenden Erfindung, ein Verfahren anzugeben, wie die Konfiguration beziehungsweise die Produktions- und Produktdaten einer installierten intelligenten elektrischen Einrichtung insbesondere von derem Hersteller nachverfolgt werden kann. Diese Aufgabe wird durch das erfindungsgemässe Datenaufnahmeverfahren gemäss Anspruch 1 gelöst.

Es ist ferner eine Aufgabe der vorliegenden Erfindung, eine Datenaufnahmevorrichtung zur Aufnahme von aus mindestens einer intelligenten elektronischen Einrichtung ausgegebenen Produktions- und Produktdaten bereitzustellen, mit welcher eine kontinuierliche Nachverfolgung einer Konfiguration und eine Erfassung von installierten Komponenten der intelligenten elektronischen Einrichtung ermöglicht wird. Diese Aufgabe wird erfindungsgemäss durch die Datenaufnahmevorrichtung gemäss Anspruch 17 gelöst.

Ein wesentlicher Gedanke der Erfindung besteht darin, mittels einer zwischen eine Datenkollektoreinrichtung, die der mindestens einen zu überwachenden intelligenten elektronischen Einrichtung zugeordnet ist, und die Speichereinrichtung geschalteten Konfigurationseinrichtung eine effiziente Steuerung der Speicherung der von der Kollektoreinrichtung bereitgestellten Produktions- und Produktdaten, die als Übertragungsdaten von der zu überwachenden intelligenten elektronischen Einrichtung zu der Speichereinrichtung übertragen werden, bereitzustellen. Die Übertragungsdaten beinhalten insbesondere die Produktions- und Produktdaten der intelligenten elektronischen Einrichtung (IED).

Die Übertragungsdaten werden dabei zunächst von der Kollektoreinrichtung über einen ersten Datenübertragungspfad zur Konfigurationseinrichtung übertragen. Danach werden diese an die Konfigurationseinrichtung übertragenen Übertragungsdaten von der Konfigurationseinrichtung zur Seichereinrichtung über einen zweiten Datenübertragungspfad übertragen. Dies ermöglicht zum einen, dass nicht gleichzeitig der erster Datenübertragungspfad und der zweite Datenübertragungspfad hergestellt sein muss. Zum anderen wird dadurch ermöglicht, dass zwischen der intelligenten elektronischen Einrichtung und der Speichereinrichtung kein direkter Datenübertragungspfad bestehen muss.

Durch eine derartige Nachverfolgungsmöglichkeit von Änderungen der Konfiguration und Änderungen installierter Komponenten der intelligenten elektronischen Einrichtung ist es möglich, für den Hersteller wichtige Daten, d.h. Produktions- und Produktdaten der installierten elektronischen Einrichtung bzw. mehrerer installierter intelligenter elektronischer Einrichtungen in einer zentralen Datenbank zu sammeln, um bei einem Stör- bzw. Fehlerfall der intelligenten elektronischen Einrichtung (IED) schnell reagieren zu können. Insbesondere ist es vorteilhaft, dass ein Wartungsbetrieb einer installierten intelligenten elektronischen Einrichtung durch eine genaue Kenntnis von deren Konfiguration und Aufbau erleichtert wird.

Ein weiterer Vorteil besteht darin, dass in einer einzigen Speichervorrichtung, die als ein Serversystem ausgelegt sein kann, sämtliche Daten einheitlich passwortgestützt von einer großen Anzahl intelligenter elektronischer Einrichtungen gespeichert werden können. Überdies ist es zweckmäßig, dass zur Datenspeicherung von Produktions- und Produktdaten der intelligenten elektronischen Einrichtungen keine Interaktion mit dem Benutzer der entsprechenden intelligenten elektronischen Einrichtung erforderlich ist.

Durch das erfindungsgemäße Datenaufnahmeverfahren ist es somit in vorteilhafter Weise möglich, sowohl festzustellen, an welchem Ort sich eine zu überwachende intelligente elektronische Einrichtung befindet, als auch Kunden- und Parameterdaten der intelligenten elektronischen Einrichtung abzufragen.

In zweckmäßiger Weise umfassen die Produktions- und Produktdaten beispielsweise Seriennummern, das Herstellungsland, Hardware-Versionsnummern, Software/Firmware-Versionsnummern, verwendete Testdaten, Gesamtlaufzeit und den Standort der intelligenten elektronischen Einrichtung.

Somit ist es ein Hauptvorteil der vorliegenden Erfindung, dass die Qualität verfügbarer Daten über installierte intelligente elektronische Einrichtungen in einer zentralen Datenbank bzw. einer zentralen Speichereinrichtung verbessert wird. Weiterhin ist es bei dem erfindungsgemäßen Datenaufnahmeverfahren zum Aufnehmen von aus mindestens einer intelligenten elektronischen Einrichtung ausgegebenen Produktions- und Produktdaten zweckmäßig, dass die Konfigurationseinrichtung nur im Bedarfsfall an die Datenübertragungseinrichtung angeschlossen werden muss.

Die erfindungsgemäße Datenaufnahmevorrichtung zur Aufnahme von aus mindestens einer intelligenten elektronischen Einrichtung ausgegebenen Daten weist im Wesentlichen auf:
a) mindestens eine der intelligenten elektronischen Einrichtung zugeordnete Datenkollektoreinrichtung, die die aus der intelligenten elektronischen Einrichtung ausgegebenen Produktions- und Produktdaten aufnimmt und die diese in zu übertragende Übertragungsdaten umsetzt;
b) eine Speichereinrichtung zur Speicherung der mittels der mindestens einen Datenkollektoreinrichtung bereitgestellten Übertragungsdaten; und
c) eine Datenübertragungseinrichtung zur Übertragung der Übertragungsdaten von der Datenkollektoreinrichtung zu der Speichereinrichtung.

Hierbei weist die Datenaufnahmevorrichtung ferner eine zwischen die Datenkollektoreinrichtung und die Datenspeichereinrichtung geschaltete Konfigurationseinrichtung zur Steuerung der Speicherung der von der Datenkollektoreinrichtung bereitgestellten Übertragungsdaten auf, wobei die Konfigurationseinrichtung durch eine portable Rechnereinrichtung ausgebildet ist, insbesondere durch ein Notebook oder ein Laptop.

Weiterhin umfasst das erfindungsgemäße Verfahren zum Aufnehmen von aus mindestens einer intelligenten elektronischen Einrichtung ausgegebenen Produktions- und Produktdaten im Wesentlichen die folgenden Schritte:
a) Empfangen von aus der intelligenten elektronischen Einrichtung ausgegebenen Produktions- und Produktdaten mittels mindestens einer der intelligenten elektronischen Einrichtung zugeordneten Datenkollektoreinrichtung;
b) Verarbeiten der empfangenen Produktions- und Produktdaten in zu übertragende Übertragungsdaten mittels der Datenkollektoreinrichtung;
c) Ausgeben der Übertragungsdaten aus der Datenkollektoreinrichtung;
d) Übertragen der von der Datenkollektoreinrichtung ausgegebenen Übertragungsdaten zu einer Speichereinrichtung mittels mindestens einer Datenübertragungseinrichtung; und
e) Speichern der zu der Speichereinrichtung übertragenen Übertragungsdaten in der Speichereinrichtung, wobei eine Speicherung der mittels der Übertragungseinrichtung übertragenen Übertragungsdaten mittels einer zwischen die Datenkollektoreinrichtung und die Speichereinrichtung geschalteten Konfigurationseinrichtung gesteuert wird und wobei, bevor die Konfigurationseinrichtung die Übertragungsdaten empfängt, ein erster Datenübertragungspfad der Datenübertragungseinrichtung zwischen der Datenkollektoreinrichtung und der Konfigurationseinrichtung (300) hergestellt wird und nach dem Übertragen der Übertragungsdaten an die Konfigurationseinrichtung der erste Datenübertragungspfad getrennt wird, und, bevor die Übertragungsdaten an die Speichereinrichtung übermittelt werden, ein zweiter Datenübertragungspfad der Datenübertragungseinrichtung zwischen der Konfigurationseinrichtung und der Speichereinrichtung hergestellt wird.

In den Unteransprüchen finden sich vorteilhafte Weiterbildung und Verbesserungen des jeweiligen Gegenstandes der Erfindung.

Gemäss einer bevorzugten Weiterbildung der vorliegenden Erfindung besteht der erste Datenübertragungspfad und / oder der zweite Datenübertragungspfad lediglich temporär. Dies ermöglicht, dass keine Aufwendig zu installierende und teure dauerhafte Datenübertragungspfade installiert werden müssen.

Gemäss einer bevorzugten Weiterbildung der vorliegenden Erfindung wird der erste Datenübertragungspfad getrennt, bevor der zweite Datenübertragungspfad aufgebaut wird. Dies ermöglicht, dass die Übertragungsdaten (beinhaltend die Produktions- und Produktdaten) in unmittelbarer Nähe zur intelligenten elektronischen Einrichtung (IED) von der an die intelligente Elektronische Einrichtung angeschlossenen Datenkollektoreinrichtung zur Konfigurationseinrichtung übertragen werden. Die Übertragung der Produktion- und Produktdaten von der Konfigurationseinrichtung zur Speichereinrichtung erfolgt zu einem späteren Zeitpunkt von einem anderen Ort aus.

Gemäss einer weiteren bevorzugten Weiterbildung der vorliegenden Erfindung ist der erste Datenübertragungspfad durch ein Datenübertragungskabel ausgebildet. Dies ermöglicht eine äussert einfache und zuverlässige Datenübertragung.

Vorzugsweise wird als Datenübertragungskabel ein kurzes Datenübertragungskabel verwenden von beispielsweise einigen Metern Länge.

Gemäss einer weiteren bevorzugten Weiterbildung der vorliegenden Erfindung ist der erste Datenübertragungspfad durch eine drahtlose

Datenübertragungsverbindung ausgebildet, wie beispielsweise eine Datenübertragungsverbindung über eine Funkverbindung oder eine optische Datenübertragungsverbindung. Eine Übertragungsreichweite dieser drahtlosen Datenübertragungsverbindung beträgt dabei bevorzugt eine kurze Reichweite von bis zu einigen Metern.

Gemäss einer weiteren bevorzugten Weiterbildung der vorliegenden Erfindung ist die Konfigurationseinrichtung durch eine portable Rechnereinrichtung ausgebildet, insbesondere durch ein Notebook oder ein Laptop. Dies ermöglicht zusammen mit den temporären Datenübertragungspfaden eine äussert einfache und kostengünstige Datenübertragung. Lediglich bei Bedarf wird der erste Datenübertragungspfad hergestellt, wodurch keine aufwendigen Installationen dieses Datenübertragungspfades verursacht werden. Insbesondere ist kein Unterhalt dieses Datenübertragungspfades notwendig. Ebenso wird der zweite Datenübertragungspfad nur bei Bedarf aufgebaut.

Gemäß einer weiteren Weiterbildung der vorliegenden Erfindung weist die Datenübertragungseinrichtung einen ungeschützten Datenübertragungspfad zwischen der Datenkollektoreinrichtung und der Konfigurationseinrichtung und einen geschützten Datenübertragungspfad zwischen der Konfigurationseinrichtung und der Speichereinrichtung auf.

In vorteilhafter Weise wird eine Verbindung zwischen der Datenkollektoreinrichtung und der Konfigurationseinrichtung in einer lokalen Umgebung ausgeführt, so dass hier ein ungeschützter Datenübertragungspfad bereitgestellt werden kann, d.h. über diesen Datenübertragungspfad übertragenen Daten müssen weder verschlüsselt noch geschützt werden.

Andererseits ist die Verbindung zwischen der Konfigurationseinrichtung und der Speichereinrichtung durch beispielsweise eine ESF- und/oder einer GSM- und/oder einer GPRS- und/oder Internet-Verbindung bereitgestellt, derart, dass hier vorteilhaft ein geschützter Datenübertragungspfad eingerichtet wird. Ein Sichern von Daten umfasst vorzugsweise die Schritte einer Datenverschlüsselung und einer Datenauthentifizierung.

Gemäß einer weiteren Weiterbildung der vorliegenden Erfindung weist die Konfigurationseinrichtung zur Steuerung der Speicherung der von der Datenkollektoreinrichtung aufgenommenen Daten ein Datenkollektormodul auf. Vorzugsweise ist ein derartiges Datenkollektormodul derart ausgebildet, dass dieses Daten von der mindestens einen zu überwachenden intelligenten elektronischen Einrichtung aufnehmen und an eine zentrale Speichereinrichtung weitergeben kann. Die Datenkollektoreinrichtung weist vorteilhafterweise einen Server-Detektor zur Erfassung eines Serversystems, in welchem die Daten zu speichern sind, auf. Ferner umfasst die Datenkollektoreinrichtung einen Pufferspeicher zur Pufferung von in der Speichereinrichtung zu speichernden Übertragungsdaten.

Es ist vorteilhaft, wenn die Speichereinrichtung als ein zentraler Dateiserver ausgebildet wird. Ferner ist es möglich, dass mehrere Speichereinrichtungen bereitgestellt werden, wobei eine einzelne Speichereinrichtung ein Teil eines Server-Systems darstellt.

Gemäß noch einer weiteren Weiterbildung der vorliegenden Erfindung ist die Speichereinrichtung als ein zentraler Datei-Server ausgebildet, welcher mit mindestens zwei unterschiedlichen intelligenten elektronischen Einrichtungen mittels jeweils zugeordneten Datenübertragungseinrichtungen verbunden ist.

Gemäß noch einer weiteren Weiterbildung der vorliegenden Erfindung umfassen die aus der intelligenten elektronischen Einrichtung ausgegebenen Produktions- und Produktdaten eine oder mehrere der folgenden: Seriennummern, Herstellungsland, Versionsnummer, Hardware-Version, Software/Firmware-Version, Testdatensätze, Prozessorseriennummern, MAC-Adresse, Standort und Einsatzdauer.

Gemäß noch einer weiteren Weiterbildung der vorliegenden Erfindung ist die Speichereinrichtung aus einer Speicherprozessoreinheit und einem Speichermedium gebildet. In zweckmäßiger Weise steuert die Speicherprozessoreinheit eine Datenspeicherung von zu speichernden Daten in dem Speichermedium.

Gemäß noch einer weiteren Weiterbildung der vorliegenden Erfindung umfasst die mit der Konfigurationseinrichtung durchgeführte Steuerung der Speicherung der über die Datenübertragungseinrichtung übertragenen Übertragungsdaten im Wesentlichen die folgenden Schritte:
a) Eingeben von Benutzeridentifikationsdaten eines Benutzers in die Konfigurationseinrichtung;
b) Erfassen von Kenndaten der Konfigurationseinrichtung;
c) Registrieren des Benutzers in der Konfigurationseinrichtung mittels Benutzeridentifikationsdaten;
d) Übertragen der Benutzeridentifikationsdaten und der Kenndaten der Konfigurationseinrichtung von der Konfigurationseinrichtung zu der Speichereinrichtung;
e) Registrieren des Benutzers in der Speichereinrichtung mittels der Benutzeridentifikationsdaten, wobei Passwortdaten erzeugt werden, die von den Benutzeridentifikationsdaten abhängen;
f) Übertragen der von den Benutzeridentifikationsdaten abhängigen Passwortdaten von der Speichereinrichtung zu der Konfigurationseinrichtung; und
g) Speichern der Benutzeridentifikationsdaten und/oder der von den Benutzeridentifikationsdaten abhängigen Passwortdaten in der Konfigurationseinrichtung. In vorteilhafter Weise werden die Übertragungsdaten verschlüsselt und/oder authentifiziert.

Gemäß noch einer weiteren bevorzugten Weiterbildung der vorliegenden Erfindung werden die Produktions- und Produktdaten von Komponenten der intelligenten elektronischen Einrichtung (IED) (sekundäre Einrichtung) aufgenommen, wobei die intelligente elektronische Einrichtung eine oder mehrere der folgenden Komponenten umfassen: analoge Eingabeeinheiten, Sensoreinheiten, I/O-Schnittstelleneinheiten, Energieversorgungseinheiten und Prozessoreinheiten.

Gemäß noch einer weiteren bevorzugten Weiterbildung der vorliegenden Erfindung werden die Übertragungsdaten über einen Anschluss der Konfigurationseinrichtung in dieser automatisch zwischengespeichert.

Es ist vorteilhaft, wenn bei einem Registrieren des Benutzers in der Konfigurationseinrichtung ein Benutzername und ein Benutzerpasswort in der Konfigurationseinrichtung dauerhaft gespeichert werden. Gemäß noch einer weiteren bevorzugten Weiterbildung der vorliegenden Erfindung werden die von den Benutzeridentifikationsdaten abhängigen Passwortdaten durch ein im Vergleich zu den Benutzeridentifikationsdaten langes Datenwort gebildet.

Gemäß noch einer weiteren bevorzugten Weiterbildung der vorliegenden Erfindung wird bei einem Verbinden der mindestens einen intelligenten elektronischen Einrichtung mit der mindestens einen Datenübertragungseinrichtung ein automatisches Ausgeben der Produktions- und Produktdaten mittels der mindestens einen der intelligenten elektronischen Einrichtung zugeordneten Datenkollektoreinrichtung initiiert.

Gemäss einer weiteren Weiterbildung der vorliegenden Erfindung sind die intelligente elektronische Einrichtung und die Datenkollektoreinrichtung in einem gemeinsamen Gehäuse eingebaut.

Auf diese Weise ist es möglich, die erfindungsgemäße Aufgabe zu lösen, d.h. eine Datenaufnahmevorrichtung und ein entsprechendes Datenaufnahmeverfahren bereitzustellen, bei welchen die Erkennung von installierten intelligenten elektronischen Einrichtungen automatisch ermöglicht wird, wobei für den Hersteller wichtige Produktions- und Produktdaten erfasst werden. Somit werden ein Wartungsbetrieb und eine Konfiguration sowie eine Um-Konfiguration bzw. eine Re-Konfiguration von zu überwachenden intelligenten elektronischen Einrichtungen auf einfache Weise ermöglicht.

### KURZE BESCHREIBUNG DER ZEICHNUNGEN

Ausführungsbeispiele der Erfindung sind in den Zeichnungen dargestellt und in der nachfolgenden Beschreibung näher erläutert.

In den Zeichnungen zeigen:
- Fig. 1: ein Blockbild der Datenaufnahmevorrichtung, wobei schematisch eine Verbindung zwischen einer zu überwachenden intelligenten elektronischen Einrichtung (IED) und einer Speichereinrichtung über eine Konfigurationseinrichtung dargestellt ist;
- Fig. 2: die in Fig. 1 dargestellten Datenaufnahmevorrichtung für mehrere zu überwachende intelligenter elektronische Einrichtungen (IED) sowie die entsprechenden Datenübertragungspfade zu einer zentralen Speichereinrichtung;
- Fig. 3: ein Blockbild der wesentlichen Betriebsschritte eines erfindungsgemässen Datenaufnahmeverfahrens zum Aufnehmen von aus mindestens einer intelligenten elektronischen Einrichtung ausgegebenen Produktions- und Produktdaten;
- Fig. 4: eine allgemeine Darstellung der erfindungsgemäßen Datenaufnahmevorrichtung mit einer Datenübertragungseinrichtung zwischen einer intelligenten elektronischen Einrichtung (IED) und einer Speichereinrichtung;
- Fig. 5: ein Blockbild zur Erläuterung eines Datenaustausches zwischen einer intelligenten elektronischen Einrichtung (IED) und einer Konfigurationseinrichtung mit Datenkollektormodul;
- Fig. 6: ein Blockbild, das den Aufbau eines Datenkollektormoduls veranschaulicht;
- Fig. 7: ein Blockdiagramm einer Datenbank-Funktion gemäß einem bevorzugten Ausführungsbeispiel der vorliegenden Erfindung;
- Fig. 8: ein Blockbild zur automatischen Erfassung von in einer intelligenten elektronischen Einrichtung installierten Komponenten und einer Übertragung von Produktdaten; und
- Fig. 9: ein Blockbild eines Protokolls zum Austausch von Produktdaten.

In den Figuren bezeichnen gleiche Bezugszeichen gleiche oder funktionsgleiche Komponenten oder Schritte.

### WEGE ZUR AUSFÜHRUNG DER ERFINDUNG

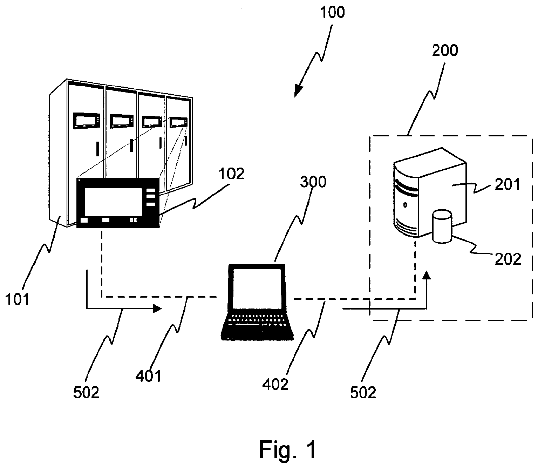

Die vorliegende Erfindung wird nachstehend unter Bezugnahme auf ein bevorzugtes Ausführungsbeispiel beschrieben werden. Fig. 1 zeigt ein Blockbild einer Anordnung zur Aufnahme von aus einer intelligenten elektronischen Einrichtung (IED, Intelligent Electronic Device; auch als sekundäre Einrichtung bezeichnet) ausgegebenen Produktions- und Produktdaten. Intelligente elektronische Einrichtungen (IED) werden zur Überwachung und Steuerung von elektrischen Einrichtungen (auch als primäre Einrichtungen bezeichnet; in den Figuren nicht gezeigt) wie beispielsweise Leistungstransformatoren, Umrichterstationen, Leistungseinrichtungen etc. in Mittelspannungs-Schaltanlagen und/oder Hochspannungs-Schaltanlagen verwendet. Diese primären Einrichtungen sind bevorzugt in unmittelbarer Umgebung zur intelligenten elektronischen Einrichtung angeordnet.

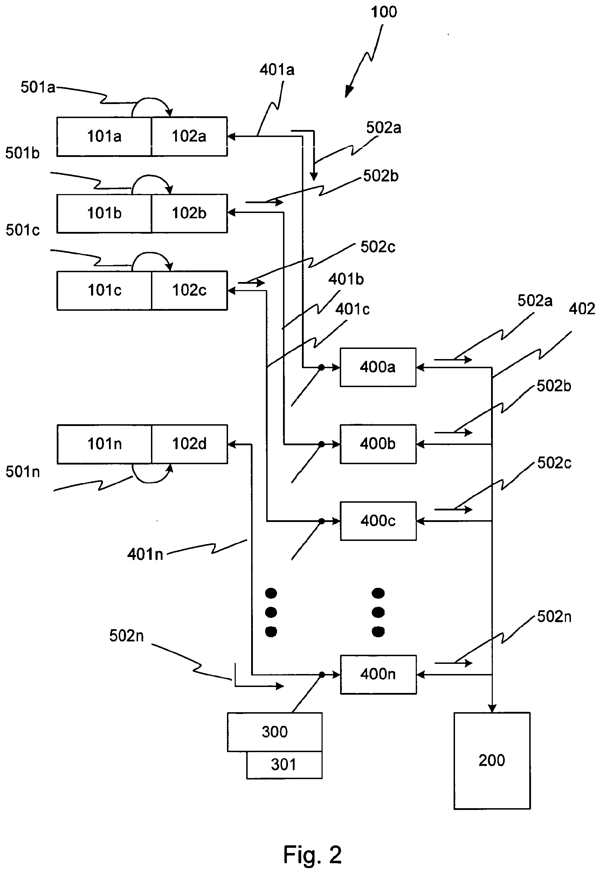

In Fig. 1 ist eine intelligente elektronische Einrichtung (IED) mit einem Bezugszeichen 101 bezeichnet. Es sei darauf hingewiesen, wie untenstehend unter Bezugnahme auf Fig. 2 beschrieben, dass eine große Anzahl intelligenter elektronischer Einrichtungen (IED) 101a-101n durch das erfindungsgemäße Verfahren hinsichtlich ihrer Produktions- und Produktdaten überwacht werden können.

Die intelligente elektronische Einrichtung (IED) 101 ist hinsichtlich ihrer eigenen Produktions- und Produktdaten zu überwachen, damit Änderungen an der intelligenten elektronischen Einrichtung (IED) 101 festgestellt werden können. Zu diesem Zweck ist jeder zu überwachenden intelligenten elektronischen Einrichtung (IED) 101 eine Datenkollektoreinrichtung 102 zugeordnet, die die aus der intelligenten elektronischen Einrichtung (IED) 101 ausgegebenen Produktions- und Produktdaten aufnimmt und in zu übertragende Übertragungsdaten 502 umsetzt. Die Datenkollektoreinrichtung 102 ist - wie in Fig. 1 gezeigt - in das Gehäuse der intelligenten elektronischen Einrichtung 101 eingebaut. Alternativ kann die Datenkollektoreinrichtung 102 auch in unmittelbarer Umgebung zur intelligenten elektronischen Einrichtung 101 angeordnet sein.

Mit einem Bezugszeichen 200 ist in Fig. 1 eine Speichereinrichtung bezeichnet, die als eine zentrale Einheit dazu dient, Produktions- und Produktdaten sämtlicher zu überwachender intelligenter elektronischer Einrichtungen (IED) 101 (in Fig. 2 mit den Bezugszeichen 101a-101n bezeichnet) aufzunehmen.

Zur Übertragung der Produktions- und Produktdaten wird die Datenkollektoreinrichtung 102 der zu überwachenden intelligenten elektronischen Einrichtung (IED) 101 über einen ersten Datenübertragungspfad 401 mit einer Konfigurationseinrichtung 300 verbunden, sodass die Übertragungsdaten 502 von der Datenkollektoreinrichtung 102 zur Konfigurationseinrichtung 300 übertragen werden können. Weiter wird die Konfigurationseinrichtung 300 über einen zweiten Datenübertragungspfad 402 mit der Speichereinrichtung 200 verbunden, sodass die an die Konfigurationseinrichtung 300 übertragenen Übertragungsdaten 502 weiter an die Speichereinrichtung 200 übertragen werden können. Der erste Datenübertragungspfad 401 und der zweite Datenübertragungspfad 402 bildet dabei zusammen mit der Konfigurationseinrichtung 300 eine Datenübertragungseinrichtung (in Fig. 2 mit 400a-400n bezeichnet). Der erste Datenübertragungspfad 402 kann durch ein Datenübertragungskabel oder durch eine drahtlose Datenübertragungsverbindung ausgebildet sein.

Der erste Datenübertragungspfad 402 weist eine kurze Länge auf, das heisst, dass das Datenübertragungskabel eine Länge von einigen Metern aufweist oder die drahtlose Datenübertragungsverbindung eine Übertragungsreichweite von einigen Metern aufweist. Dies ermöglicht, dass keine Datenübertragungskabel aufwendig verlegt werden müssen. Falls ein Datenübertragungskabel für den ersten Datenübertragungspfad 401 verwendet wird, kann dieses bei Bedarf an den Datenkollektor 102 und an die Konfigurationseinrichtung 300 angeschlossen werden. Falls eine drahtlose Datenübertragungsverbindung für den ersten Datenübertragungspfad 401 verwendet wird, reicht bei einer Funkverbindung eine kleine Leistung aus. Ebenso kann eine drahtlose, optische Verbindung zur Anwendung gelangen. Falls eine Funkverbindung zur Anwendung gelangt, muss sichergestellt sein, dass diese die primären Einrichtungen wie auch die sekundären Einrichtungen in ihrer Umgebung nicht beeinflusst, da ansonsten die Betriebssicherheit der Mittelspannungs-Schaltanlage beziehungsweise der Hochspannungsschaltanlage gefährdet sein könnte.

Mit Bezug auf Fig. 2 wird die Datenaufnahmevorrichtung 100 detaillierter beschrieben.

Erfindungsgemäss kann eine Konfigurationseinrichtung 300 zeitlich nacheinander an mindestens zwei verschiedene Datenkollektoreinrichtung 102a-102n temporär angeschlossen werden. Jeder Datenkollektoreinrichtung 102a-102n ist jeweils eine intelligente elektronische Einrichtung 101a-101n zugeordnet. Dies ist in Fig. 2 veranschaulicht. Somit können mit einer Konfigurationseinrichtung 300 eine große Anzahl von intelligenten elektronischen Einrichtungen (IED) 101a-101n ausgelesen werden, wobei von der jeweiligen Datenkollektoreinrichtung 102a-102n zur Konfigurationseinrichtung 300 jeweils Übertragungsdaten 502a-502n über den jeweiligen ersten Übertragungspfad 401a-401n übertragen werden.

Ebenfalls kann die Konfigurationseinrichtung 300 nur temporär über den zweiten Datenübertragungspfad 402 mit der Speichereinrichtung 200 verbunden sein, welche bevorzugt als ein zentraler Dateiserver ausgebildet ist.

Das erfindungsgemäße Verfahren zum Aufnehmen von aus mindestens einer intelligenten elektronischen Einrichtung (IED) 101, 101a-101n ausgegebenen Produktions- und Produktdaten 501, 501a-501n weist die folgenden Schritte auf:
a) Empfangen von aus der intelligenten elektronischen Einrichtung 101, 101a-101n ausgegebenen Produktions- und Produktdaten 501a-501n mittels mindestens einer der intelligenten elektronischen Einrichtung 101, 101a-101n zugeordneten Datenkollektoreinrichtung 102, 102a-102n;
b) Verarbeiten der empfangenen Produktions- und Produktdaten 501a-501n in zu übertragende Übertragungsdaten 502, 502a-502n mittels der Datenkollektoreinrichtung 102, 102a-102n;
c) Ausgeben der Übertragungsdaten 502, 502a-502n aus der Datenkollektoreinrichtung 102, 102a-102n;
d) Übertragen der von der Datenkollektoreinrichtung 102, 102a-102n ausgegebenen Übertragungsdaten 502, 502a-502n zu der Speichereinrichtung 200 mittels mindestens einer Datenübertragungseinrichtung 400a-400n; und
e) Speichern der zu der Speichereinrichtung 200 übertragenen Übertragungsdaten 502, 502a-502n in der Speichereinrichtung 200,
wobei eine Speicherung der mittels der Übertragungseinrichtung 400a-400n übertragenen Übertragungsdaten 502, 502a-502n mittels einer zwischen die Datenkollektoreinrichtung 102, 102a-102n und die Speichereinrichtung 200 geschalteten Konfigurationseinrichtung 300 gesteuert wird, wobei,
- bevor die Konfigurationseinrichtung 300 die Übertragungsdaten 502, 502a-502n von der Datenkollektoreinrichtung 102, 102a-102n empfängt, ein erster Datenübertragungspfad 401, 401a-401n der Datenübertragungseinrichtung 400a-400n zwischen der Datenkollektoreinrichtung 102, 102a-102n und der Konfigurationseinrichtung 300 hergestellt wird und nach dem Übertragen der Übertragungsdaten 502, 502a-502n an die Konfigurationseinrichtung 300 der erste Datenübertragungspfad 401, 401a-401n getrennt wird, und,
- bevor die Übertragungsdaten 502, 502a-502n von der Konfigurationseinrichtung 300 an die Speichereinrichtung 200 übermittelt werden, ein zweiter Datenübertragungspfad 402, 402a-402n der Datenübertragungseinrichtung 400a-400n zwischen der Konfigurationseinrichtung 300 und der Speichereinrichtung 200 hergestellt wird.

Die aus der intelligenten elektronischen Einrichtung 101, 101a-101n ausgegebenen Produktions- und Produktdaten 501a-501n lassen zweckmäßige Aussagen über Standort, Verwendungszweck, Betriebslaufzeit etc. der zu überwachenden intelligenten elektronischen Einrichtung (IED) 101 zu. Beispiele für die ausgegebenen Produktions- und Produktdaten 501a-501n umfassen: Seriennummer, Herstellungsland, Versionsnummer, Hardware-Version, Software/Firmware-Version, Testdatensätze, Prozessorseriennummer, Standort, MAC-Adresse und Einsatzdauer.

Die Produktions- und Produktdaten der intelligenten elektronischen Einrichtung (IED) 101 (auch als sekundäre Einrichtung bezeichnet) sind zu unterscheiden von aktuellen Zustandsdaten der elektrischen Einrichtung (auch als primäre Einrichtung bezeichnet). Als aktuelle Zustandsdaten sind Messwerte von Sensoren wie beispielsweise ein Strommessgerät oder Spannungsmessgerät aber auch Gassensoren, die den aktuellen Gasdruck in einer gasisolierten Schaltanlage, die Güte des Isoliergases einer gasisolierten Schaltanlage messen. Weitere aktuelle Zustandsdaten können auch den momentanen Schaltzustand eines Schalter betreffen.

Durch die Speicherung der Produktions- und Produktdaten 501a-501n der intelligenten elektronischen Einrichtung (IED) 101, 101a-101n in der Speichereinrichtung 200, kann eine Veränderung der Produktions- und Produktdaten 501a-501n einzelner intelligenter elektronischen Einrichtung (IED) 101 jederzeit, unter Verwendung der in der Speichereinrichtung 200 gespeicherten Daten, nachvollzogen werden.

Insbesondere kann eine Veränderung der Hardware nachverfolgt werden, beispielsweise wenn der Prozessor der intelligenten elektronischen Einrichtung 101, 101a-101n wegen eines Defekts ausgewechselt wurde. Falls eine neue Hardwarekomponente zur Erweiterung der Funktionalität der intelligente elektronische Einrichtung (IED) 101, 101a-101n in diese eingebaut wird, werden die Produktions- und Produktdaten 501a-501n der intelligenten elektronischen Einrichtung (IED) 101, 101a-101n um Daten dieser neuen Hardwarekomponente erweitert. Das bedeutet, dass sich die Produktions- und Produktdaten 501-501n wegen der Erweiterung ändern. Ebenso kann eine Änderung des Standortes der intelligenten elektronischen Einrichtung 101, 101a-101n nachverfolgt werden. Mittels der Software/Firmware-Version kann eine Änderung der Software der intelligenten elektronischen Einrichtung 101, 101a-101n nachverfolgt werden.

Weiter ist es möglich, durch Auswerten der auf der Speichereinrichtung 200 gespeicherten Produktions- und Produktdaten Inkompatibilitäten zwischen der Hardware der intelligenten elektronischen Einrichtung 101 und der auf der intelligenten elektronischen Einrichtung 101 verwendeten Software festzustellen.

Wie in Fig. 1 dargestellt ist, besteht die Speichereinrichtung 200 im Wesentlichen aus einer Speicherprozessoreinheit 201 und einem Speichermedium 202. Die Speicherprozessoreinheit 201 steuert ein Abspeichern der übertragenen Übertragungsdaten 502 als zu speichernde Daten in dem Speichermedium 202. Die Auslegung des Speichermediums ist dem Fachmann bekannt, so dass dieses hier nicht näher erläutert ist. Beispiele für Speichermedien sind Festplattenspeicher, optische Platten, Magnetbandspeicher, Halbleitermedien etc. Die Speichereinrichtung 200 kann ferner einen Teil des Serversystems bilden.

Das erfindungsgemäße Datenaufnahmeverfahren zum Aufnehmen von aus mindestens einer intelligenten elektronischen Einrichtung (IED), 101, 101a-101n ausgegebenen Produktions- und Produktdaten 501a-501n gestattet es, dass die Speicherung der mittels der Datenübertragungseinrichtung 400a-400n übertragenen Übertragungsdaten 502a-502n mittels der zwischen die Datenkollektoreinrichtung 102, 102a-102n und die Speichereinrichtung 200 geschalteten Konfigurationseinrichtung 300 gesteuert wird. Die zwischen die zu überwachende elektronische Einrichtung 101, 101a-101n und die Speichereinrichtung 200 geschaltete Konfigurationseinrichtung 300 kann in vorteilhafter Weise durch eine portable Recheneinrichtung 300 wie beispielsweise eine Notebook ausgebildet sein. Mittels der Konfigurationseinrichtung 300 ist es möglich, Produktions- und Produktdaten 501a-501n aus der Datenkollektoreinrichtung 102, die der entsprechenden intelligenten elektronischen Einrichtung (IED) 101 zugeordnet ist, zu erhalten.

Mittels der portablen Rechnereinrichtung 300 ist es möglich, diese in unmittelbarer Nähe zu einer der intelligenten elektronischen Einrichtungen (IED) 101, 101a-101n aufzustellen. Der erste Datenübertragungspfad 401, 401a-401n muss folglich nur über eine kurze Distanz aufgebaut werden. Nachdem die Übertragungsdaten 502, 502a-502n von der dieser intelligenten elektronischen Einrichtung (IED) zugeordneten Datenkollektoreinrichtung übertragen sind, kann der erste Datenübertragungspfad 401, 401a-401n getrennt werden. Die portable Rechnereinrichtung 300 kann darauf folgend von dieser intelligenten elektronischen Einrichtung (IED) beliebig weit entfernt werden und an diesem entfernten Ort kann der zweite Datenübertragungspfad 402, 402a-402n zwischen der portablen Rechnereinrichtung 300 und der Speichereinrichtung 200 aufgebaut und die Übertragungsdaten 502 an die Speichereinrichtung 200 übertragen werden. Folglich ist es insbesondere nicht notwendig eine direkte beziehungsweise zeitlich wie auch örtliche ununterbrochenen Datenverbindung zwischen der intelligenten elektronischen Einrichtung 101, 101a-101n und der Speichereinrichtung 200 herzustellen.

Es sei darauf hingewiesen, dass bei elektrischen Einrichtungen, die auch als Primäreinrichtungen bezeichnet werden und beispielsweise als Übertragungseinrichtungen, Energieerzeugungsstationen, Leistungstransformatoren, etc. ausgebildet sind, eine Überwachung von Produktions- und Produktdaten mittels sekundärer Einrichtungen durchgeführt wird. Derartige sekundäre Einrichtungen bestehen aus "intelligenten" elektronischen Komponenten, die die Produktions- und Produktdaten der primären Einrichtungen erhalten und damit Information über die Primäreinrichtungen speichern können.

Bei intelligenten elektronischen Einrichtungen ändern sich die Anforderungen, die angebrachten Komponenten und die Konfigurationen im Allgemeinen auf einer kontinuierlichen Grundlage, so dass es sehr schwierig und fehleranfällig ist, derartige Änderungen nachzuverfolgen. Eine genaue Kenntnis des gegenwärtigen Zustands bzw. der gegenwärtigen Konfiguration einer oder mehrerer elektronischer Einrichtungen einer bestimmten Installation stellt daher für die Wartung derartiger Einrichtungen und die kontinuierliche Überwachung einen wesentlichen Vorteil dar.

Zur Überwachung der Produktions- und Produktdaten sind unterschiedliche Software-Systeme geeignet, die in die Konfigurationseinrichtung 300 geladen werden können, derart, dass diese den technischen Effekt einer zusätzlichen Überwachung der zu überwachenden elektronischen Einrichtungen bewirken. Das Software-System kann insbesondere auf der portablen Recheneinrichtung 300 betrieben werden, um Produktions- und Produktdaten der elektronischen Einrichtung geeignet automatisch von der Datenkollektoreinrichtung 102, die der elektronischen Einrichtung 101 zugeordnet ist, aufzunehmen. Ferner dient das Software-System dazu, die Daten geeignet zu einer vordefinierten Speichereinrichtung 200 zu senden, und sie dort dauerhaft zu speichern bzw. einer Weiterverarbeitung zugänglich zu machen.

Zur Aufnahme von aus mindestens einer elektronischen Einrichtung 101 ausgegebenen Produktions- und Produktdaten 501 dient die gesamte mit dem Bezugszeichen 100 bezeichnete Datenaufnahmevorrichtung. Eine derartige Datenübertragung und -aufnahme muss auf eine sichere Weise von der zu überwachenden elektronischen Einrichtung 101 zu der Speichereinrichtung 200 erfolgen. Eine Verbindung zwischen der zu überwachenden elektronischen Einrichtung 101 bzw. der dieser zugeordneten Datenkollektoreinrichtung 102 und der in Figur 1 gezeigten Konfigurationseinrichtung 300 tritt in einer lokalen Umgebung der zu überwachenden elektronischen Einrichtung 101 auf und muss somit nicht geschützt oder verschlüsselt werden. Eine derartige Verbindung - der erste Datenübertragungspfad - ist in Figur 1 durch das Bezugszeichen 401 und eine gestrichelte Linie gekennzeichnet. Andererseits muss die Verbindung zwischen der Konfigurationseinrichtung 300 und der Speichereinrichtung 200 gesichert werden, da Daten über im Allgemeinen ungesicherte Netze wie Internet oder GSM-Netze übertragen werden. Eine derartige, gesicherte Datenverbindung ist in Figur 1 mit dem Bezugszeichen 402 gekennzeichnet und bildet einen geschützten, zweiten Datenübertragungspfad, bei dem die Daten geschützt und verschlüsselt werden.

Ein derartiges Sichern der Daten schließt zwei Schritte ein: (i) eine Datenverschlüsselung und (ii) eine Datenauthentifizierung. Bei der Datenauthentifizierung muss stets die Datenquelle bekannt sein. Auf diese Weise wird sichergestellt, dass die empfangenen Daten von einer zuverlässigen Datei gesendet worden sind.

Um zu vermeiden, dass ein Benutzer, der die Konfigurationseinrichtung 300 bedient, sich selbst jedes Mal manuell gegenüber der Speichereinrichtung 200 (dem zentralen Dateiserver) dann einloggen und authentifizieren muss, wenn Daten von der Konfigurationseinrichtung 300 zu der Speichereinrichtung 200 zu übertragen sind, werden der Benutzername und das Passwort des Benutzers innerhalb der Konfigurationseinrichtung 300 zur Zeit einer Installation der Konfigurationseinrichtung 300 bzw. eines dieser zugeordneten Datenkollektormoduls 301 (Figur 2) gespeichert. Da das Passwort somit nicht erneut eingegeben werden muss und sich der Benutzer das Passwort nicht merken muss, kann dieses lang und zuverlässig zufallsmäßig erzeugt sein, d.h. es wird ein "komplexes" Passwort bereitgestellt.

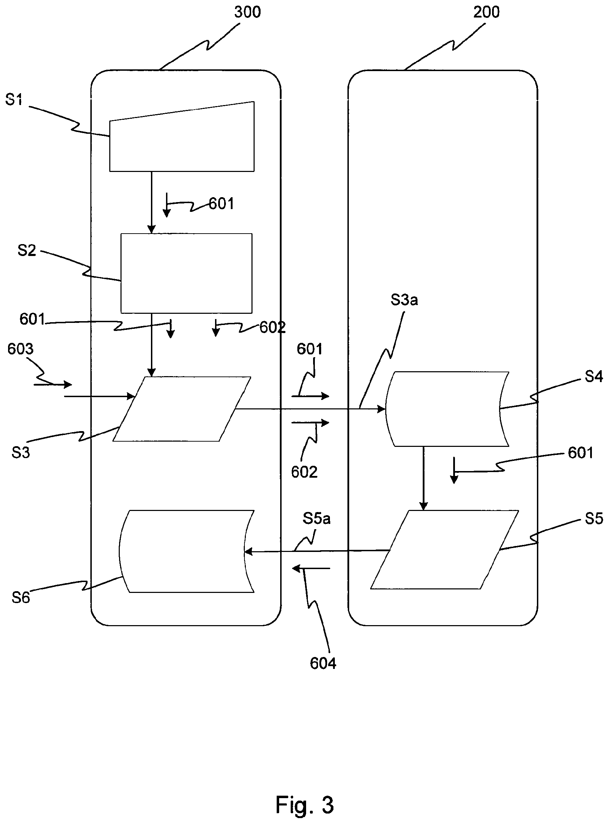

Zur Zeit eines Anschlusses der Konfigurationseinrichtung 300 an die Datenübertragungseinrichtung 401, 402 muss der Benutzer bestimmte Informationen wie beispielsweise Name der Anlage, Adresse, Firma usw. eingeben, um eine eindeutige Identifikation zu gewährleisten. Die Benutzerinformation wird zusammen mit einer Hardwareinformation wie beispielsweise einer Prozessorseriennummer, einer MAC-Adresse zu der Speichereinrichtung 200 zur Registrierung gesendet, wie untenstehend unter Bezugnahme auf Figur 3 beschrieben ist. Die Produktions- und Produktdaten, die über die Datenkollektoreinrichtung 102 der zu überwachenden elektronischen Einrichtung 101 aufgenommen werden, können beispielsweise in eine getrennte Datei in jedem Format geschrieben werden, welche später, sobald die Konfigurationseinrichtung 300 angeschlossen ist, gegebenenfalls automatisch zu der Konfigurationseinrichtung 300 übertragen werden. Der Anschluss der Konfigurationseinrichtung 300 wird von der zu überwachenden elektronischen Einrichtung 101 und der Datenkollektoreinrichtung 102 erkannt werden, derart, dass dann Daten automatisch zu der Konfigurationseinrichtung 300 übertragen werden.

Das als Datenkollektormodul 301 bezeichnete Software-System, das in der Konfigurationseinrichtung 300 enthalten ist, ist vorzugsweise in einer verschlüsselten (eingekapselten) Funktion implementiert, die von der Funktion der zu überwachenden elektronischen Einrichtung selbst unabhängig ist.

Auf diese Weise wirkt die Konfigurationseinrichtung 300 als eine Datenbrücke zwischen der zu überwachenden elektronischen Einrichtung 101 und einer zentralen Speichereinrichtung 200. Das der Konfigurationseinrichtung 300 zugeordnete Datenkollektormodul 301 arbeitet hierbei im Hintergrund und erfordert keinen Benutzereingriff, um eine Datenaufnahme zu bewirken. Eine Datenaufnahme wird gestartet, sobald die Konfigurationseinrichtung 300 mit dem gleichen Netz wie die zu überwachenden elektronische Einrichtung 101 oder die Speichereinrichtung 200, d.h. mit der Datenübertragungseinrichtung 401, 402 verbunden ist.

Das der Konfigurationseinrichtung 300 zugeordnete Datenkollektormodul 301, das als ein Software-System ausgebildet sein kann, führt hierbei unter anderem die folgenden Prozesse durch: Ankündigen eines Dienstes, Datenaufnahme, Erfassung einer Speichereinrichtung 200, Datenpufferung, Datenzwischenspeicherung, Senden angeforderter Daten, Überprüfung einer Verfügbarkeit einer entsprechenden Speichereinrichtung 200, Erkennung des Falls, dass die Speichereinrichtung 200 nicht vorhanden ist, Holen gepufferter Daten, Bestätigung über Datenübertragung, etc.

Figur 2 zeigt ein Ausführungsbeispiel der erfindungsgemäßen Datenaufnahmevorrichtung in größerem Detail. Ein Bezugszeichen 200 bezeichnet ein zentrales Dateiserversystem, d.h. eine Speichereinrichtung, in der zentral sämtliche relevanten Produktions- und Produktdaten unterschiedlicher zu überwachender Einrichtungen gespeichert werden können. Die zu überwachenden elektronischen Einrichtungen sind in dem in Figur 2 gezeigten Beispiel in einer Anzahl n vorhanden, d.h. zu überwachende elektronische Einrichtungen (IED) 101a, 101b, 101c, ..., 101n.

Die aus den jeweiligen zu überwachenden elektronischen Einrichtungen 101a-101n ausgegebenen Produktions- und Produktdaten 501a-501n umfassen beispielsweise Seriennummern von installierten elektronischen Komponenten, das Herstellungsland, eine Versionsnummer, die Nummern von Hardware-Version und Software/Firmware-Version, Testdatensätze, Prozessornummern, Standort, MAC-Adressen und die Gesamteinsatzdauer der elektronischen Einrichtung 101a-101n.

Wie weiterhin in Figur 2 gezeigt, ist jeder zu überwachenden elektronischen Einrichtung (IED) 101a-101n eine Datenkollektoreinrichtung 102a-102n zugeordnet. Die Datenkollektoreinrichtungen 102a-102n dienen jeweils dazu, die aus der elektronischen Einrichtung 101a-101n ausgegebenen Produktions- und Produktdaten 501a-501n aufzunehmen und diese in zu übertragende Übertragungsdaten 502a-502n umzusetzen. Die Aufnahme der Produktions- und Produktdaten kann durch Signale erfolgen, die direkt von der zu überwachenden elektronischen Einrichtung 101a-101n bereitgestellt werden. Ferner ist es möglich, Identifikationselemente wie beispielsweise HF-ID-Marker (Hochfrequenz-Identifikations-Marker) bereitzustellen, die die Produktions- und Produktdaten 501a-501n der entsprechenden elektronischen Einrichtung 101a-101n über Transponder erfassen. Derartige elektronische Schnittstellen können ebenso als Barcode-Marker ausgestaltet sein. Ferner ist es möglich, die Information über bestimmte Produktions- und Produktdaten mittels optischer Schnittstellen auszulesen.

Die den zu überwachenden elektronischen Einrichtungen 101a-101n zugeordneten Datenkollektoreinrichtungen 102a-102n sind mit der Speichereinrichtung 200 über Datenübertragungseinrichtungen 400a-400n verbunden. Es sei hier darauf hingewiesen, dass, obwohl gemäß dem in Figur 2 gezeigten Ausführungsbeispiel nur eine Speichereinrichtung 200 zur Speicherung sämtlicher relevanter Daten der zu überwachenden elektronischen Einrichtungen 101a-101n gezeigt ist, zwei oder mehrere Speichereinrichtungen 200 bzw. Dateiserver bereitgestellt werden können.

Die Datenübertragungseinrichtungen 400a-400n bestehen jeweils aus ungeschützten, ersten Datenübertragungspfaden 401a-401n (Bezugszeichen 401 in Figur 1) und geschützten, zweiten Datenübertragungspfaden 402. Die ungeschützten, ersten Datenübertragungspfade 401a-401n befinden sich in einer lokalen Umgebung der zu überwachenden elektronischen Einrichtung 101a-101n und umfassen daher keine Verschlüsselung oder Authentifizierung von zu erfassenden Produktions- und Produktdaten. Zwischen den jeweiligen ersten Datenübertragungspfad 401a-401n und den jeweiligen zweiten Datenübertragungspfad 402 wird die Konfigurationseinrichtung 300 zum Übertragen der Übertragungsdaten von der jeweiligen Datenkollektoreinrichtung 102a-102n in die Datenübertragungseinrichtung 400a-400n eingesetzt.

Obwohl in Figur 2 lediglich eine Konfigurationseinrichtung 300 mit einem dieser zugeordneten Datenkollektormodul 301 gezeigt ist, kann es zweckmäßig sein, unterschiedliche Konfigurationseinrichtungen 300 vorzusehen, die jeweils an einen ungeschützten Datenübertragungspfad 401a-401n der Datenübertragungsvorrichtung 400a-400n anschließbar sind. Die Funktionsweise der einzelnen Konfigurationseinrichtungen 300 in Bezug auf eine Speicherung von zu übertragenden Übertragungsdaten 502a-502n ist wie obenstehend unter Bezugnahme auf Figur 1 beschrieben. Die von der Konfigurationseinrichtung 300 aufgenommenen zu übertragenden Übertragungsdaten 502a-502n werden über den geschützten Datenübertragungspfad 402 der Speichereinrichtung 200 zugeführt. Die zwischen jeweilige Datenkollektoreinrichtungen 102a-102n der zu überwachenden Einrichtungen 101a-101n geschalteten Konfigurationseinrichtungen 300 dienen hierbei einer Steuerung der Speicherung der von der Datenkollektoreinrichtung 102a-102n bereitgestellten Übertragungsdaten 502a-502n.

Figur 3 veranschaulicht ein Flussdiagramm zur Erläuterung eines Datenaufnahmeverfahrens zum Aufnehmen von aus mindestens einer zu überwachenden elektronischen Einrichtung 101a-101n ausgegebenen Produktions- und Produktdaten 501a-501n gemäß einem bevorzugten Ausführungsbeispiel der vorliegenden Erfindung. Zum Aufnehmen der Produktions- und Produktdaten 501a-501n werden diese zunächst mittels mindestens einer der zu überwachenden elektronischen Einrichtungen 101a-101n zugeordneten Datenkollektoreinrichtung 102a-102n empfangen. Danach erfolgt eine Verarbeitung der empfangenen Produktions- und Produktdaten 501a-501n in zu übertragende Übertragungsdaten 502a-502n.

Anschließend werden die Übertragungsdaten 502a-502n aus der Datenkollektoreinrichtung 102a-102n ausgegeben und von der Datenkollektoreinrichtung 102a-102n zu einer Speichereinrichtung 200 mittels mindestens einer Datenübertragungseinrichtung 400a-400n übertragen. Schließlich werden die übertragenden Übertragungsdaten 502a-502n als zu speichernde Daten in der Speichereinrichtung 200 gespeichert.

Eine Speicherung der mittels der Datenübertragungseinrichtung 400a-400n übertragenen Übertragungsdaten 502a-502n als zu speichernde Daten wird mittels der zwischen die Datenkollektoreinrichtung 102a-102n und die Speichereinrichtung 200 geschalteten mindestens einen Konfigurationseinrichtung 300 gesteuert.

Nachfolgend wird die mit der Konfigurationseinrichtung 300 durchgeführte Steuerung der Speicherung der über die mindestens eine Datenübertragungseinrichtung 400a-400n übertragenen Übertragungsdaten 502a-502n detailliert erläutert. Hierbei bezeichnen in Figur 3 die Bezugszeichen 300 eine Konfigurationseinrichtung und 200 eine Speichereinrichtung derart, dass veranschaulicht ist, in welcher dieser Einrichtungen die jeweiligen Schritte S1, S2, S3, S3a, S4, S5 und S6 durchgeführt werden.

In einem ersten Schritt S1 werden Benutzeridentifikationsdaten eines Benutzers in die Konfigurationseinrichtung 300 eingegeben. Diese eingegebenen Daten werden als Benutzeridentifikationsdaten 601 gespeichert und zusammen mit Kenndaten 602 der Konfigurationseinrichtung in einem anschließenden Schritt S2 erfasst.

Schließlich wird der Benutzer in der Konfigurationseinrichtung 300 mittels der Benutzeridentifikationsdaten 601 registriert. Die Benutzeridentifikationsdaten 601 werden anschließend in dem darauffolgenden Schritt S3a zusammen mit den Kenndaten 602 der Konfigurationseinrichtung 300 von der Konfigurationseinrichtung 300 zur Speichereinrichtung 200 übertragen.

In der Speichereinrichtung 200 erfolgt in einem Schritt S4 ein Registrieren des Benutzers mittels der Benutzeridentifikationsdaten 601, wobei von den Benutzeridentifikationsdaten 601 abhängige Passwortdaten 604 in einem anschließenden Schritt S5 erzeugt werden.

Ein Übertragen der von den Benutzeridentifikationsdaten 601 abhängigen Passwortdaten 604 von der Speichereinrichtung 200 zur Konfigurationseinrichtung 300 erfolgt in einem Schritt S5a. Anschließend ist es möglich, in einem Schritt S5 die Benutzeridentifikationsdaten 601 und/oder die von den Benutzeridentifikationsdaten 601 abhängigen Passwortdaten 604 in der Konfigurationseinrichtung 300 zu speichern.

Es sei hier darauf hingewiesen, dass bei einem Registrieren des Benutzers in der Konfigurationseinrichtung 300 mittels des Schritts S3 ein Benutzername und ein Benutzerpasswort 603 in der Konfigurationseinrichtung 300 dauerhaft gespeichert werden können.

Nach einer derartigen dauerhaften Speicherung von Benutzernamen und Benutzerpasswort ist es möglich, dass bei einem Verbinden der mindestens einen zu überwachenden elektronischen Einrichtung 101a-101n mit der mindestens einen Datenübertragungseinrichtung 400a-400n ein automatisches Ausgeben der Produktions- und Produktdaten 501a-501n mittels der mindestens einen der mindestens einen zu überwachenden elektronischen Einrichtung 101a-101n zugeordneten Datenkollektoreinrichtung 102a-102n initiiert wird.

Die Speichereinrichtung 200, d.h. ein zentrales Server-System antwortet mit einem automatisch erzeugten, deskriptiven und eindeutigen Benutzernamen und einem automatisch erzeugten langen ("komplexen") Passwort, das innerhalb der Konfigurationseinrichtung 300 gespeichert und für zukünftige Anwendungen verwendet werden wird, um Daten zu authentifizieren und zu verschlüsseln, die zu der Speichereinrichtung 200 gesendet werden sollen.

Die von den Benutzeridentifikationsdaten 601 abhängigen Passwortdaten 604 werden somit durch ein im Vergleich zu den Benutzeridentifikationsdaten 601 langes Datenwort gebildet.

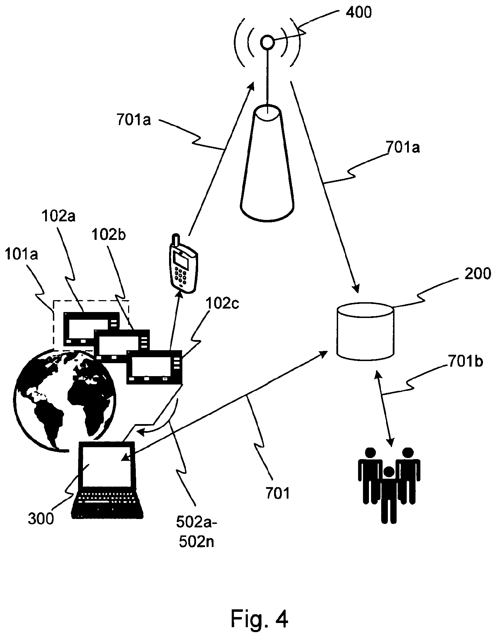

Figur 4 zeigt ein Übersichtsbild der erfindungsgemäßen Datenaufnahmevorrichtung zur Aufnahme von aus mindestens einer elektronischen Einrichtung 101a-101n ausgegebenen Produktions- und Produktdaten. Beispielhaft ist in Figur 4 lediglich eine elektronische Einrichtung 101a mit der dazugehörigen Datenkollektoreinrichtung 102a veranschaulicht.

Sobald die entsprechenden Übertragungsdaten 502a-502n zu der Konfigurationseinrichtung 300 übertragen worden sind, stehen diese für eine weitere Übertragung zu der zentralen Speichereinrichtung 200 bereit. Dies kann einerseits über eine direkte Datenverbindung 701 und andererseits über eine Funkverbindung, wie etwa ein Mobilfunknetz 701a erfolgen. Es sei darauf hingewiesen, dass das erfindungsgemäße Verfahren zum Aufnehmen von aus mindestens einer elektronischen Einrichtung 101a-101n ausgegebenen Produktions- und Produktdaten 501a-501n nicht auf eine spezifische Datenübertragungseinrichtung 400 beschränkt ist. Über eine weitere Kommunikationsleitung 701b kann schließlich auf die Speichereinrichtung 200 durch Call Centers, einen Operator, Bediener, etc. zugegriffen werden.

Es sei darauf hingewiesen, dass die zu übertragenden Übertragungsdaten 502a-502n ebenso über ein Internet-Protokoll, wie etwa beispielsweise E-Mail im XML-Format, der Speichereinrichtung 200 zugeführt werden können.

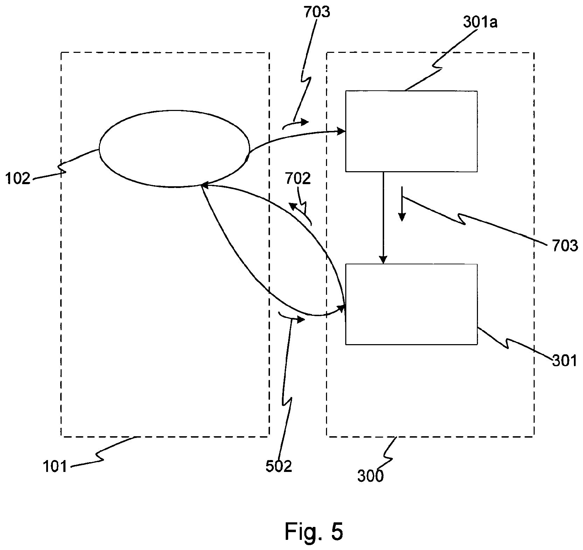

Figur 5 zeigt den Datenaustausch zwischen einer elektronischen Einrichtung 101 und einer Konfigurationseinrichtung 300 detaillierter. Die elektronische Einrichtung 101 weist eine Datenkollektoreinrichtung 102 auf, welche Produktions- und Produktdaten (in dieser Figur nicht veranschaulicht) von der elektronischen Einrichtung 101 aufnimmt. Der Datenaustausch mit externen Einheiten, die in der Konfigurationseinrichtung 300 enthalten sind, erfolgt über diese der elektronischen Einrichtung 101 zugeordnete Datenkollektoreinrichtung 102.

Die Konfigurationseinrichtung 300 weist einen Datenkollektor 301 und eine Ankündigungs-Diensteinheit 301a auf. Zwischen der Datenkollektoreinrichtung 102 der elektronischen Einrichtung 101 und dem Datenkollektormodul 301 der Konfigurationseinrichtung 300 ist eine bidirektionale Verbindung eingerichtet, über welche Übertragungsdaten 502 von der elektronischen Einrichtung 101 zu der Konfigurationseinrichtung 300 auf eine Übertragung eines Datenanforderungssignals 702 hin übertragen werden, das von dem Datenkollektormodul 301 der Konfigurationseinrichtung 300 zu der Datenkollektoreinrichtung 102 der elektronischen Einrichtung 101 gesendet wird.

Zwischen der Datenkollektoreinrichtung 102 und der Ankündigungs-Diensteinheit 301a der Konfigurationseinrichtung 300 besteht eine unidirektionale Verbindung derart, dass ein Datentypsignal von der Datenkollektoreinrichtung 102 zu der Ankündigungs-Diensteinheit 301a übertragbar ist.

Innerhalb der Konfigurationseinrichtung 300 wird das Datentypsignal 703 schließlich von der Ankündigungs-Diensteinheit 301a dem Datenkollektormodul 301 zugeführt. Es sei darauf hingewiesen, dass eine oder beide der Einheiten Datenkollektormodul 301 und Ankündigungs-Diensteinheit 301a als Softwaremodule ausgelegt sein können.

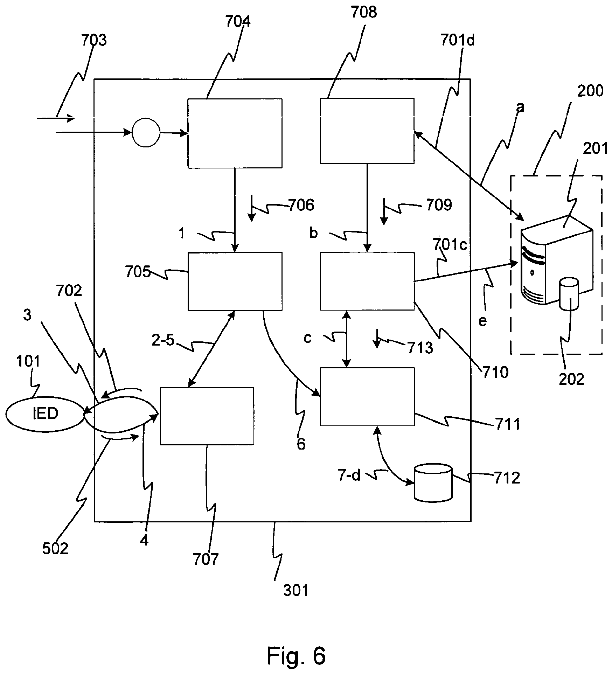

Figur 6 zeigt schließlich das in Figur 5 innerhalb der Konfigurationseinrichtung 300 dargestellte Datenkollektormodul 301 in größerem Detail. Schematisch dargestellt sind in Figur 6 die Verbindungen des Datenkollektormoduls 301 mit externen Einheiten, d. h. der elektronischen Einrichtung (IED) 101 und der Speichereinrichtung 200. Von der elektronischen Einrichtung 101 werden Übertragungsdaten 502 zu dem Datenkollektormodul 301 zugeführt, während das Datenkollektormodul 301 ein Datenanforderungssignal 702 zur Anforderung von Daten an die elektronische Einrichtung 101 sendet, wie obenstehend unter Bezugnahme auf Figur 5 beschrieben.

Ferner erhält das Datenkollektormodul 301 das obenstehend beschriebene Datentypsignal 703. Das Datentypsignal 703 wird einer Dienste-Ankündigungseinheit 704 zugeführt, welche schließlich ein erstes Anforderungssignal 706 erzeugt, das einem Datenkollektor 705 zugeführt wird. Der Datenkollektor 705 ist über eine bidirektionale Verbindung mit einer Anschlusseinheit 707 verbunden, welche ihrerseits mit der externen elektronischen Einrichtung 101 Datenanforderungssignale 702 und Übertragungsdaten 502 austauschen kann.

Ferner ist der Datenkollektor 705 des Datenkollektormoduls 301 über eine unidirektionale Verbindung mit einem Datenpuffer 711 verbunden, welcher zur Pufferung von Daten dient und welcher mit einem lokalen Puffer 712 bidirektional verbunden ist.

Ferner weist das Datenkollektormodul 301 eine Server-Detektoreinheit 708 auf, welche ein zweites Anforderungssignal 709 zu einem Daten-Gateway 710 ausgibt. Der Daten-Gateway 710 ist mit dem Datenpuffer 711 verbunden, derart, dass ein aus dem Daten-Gateway 710 ausgegebenes Holsignal 713 dem Datenpuffer 711 zuführbar ist. Somit können gepufferte Daten, die entweder in dem Datenpuffer 711 oder in dem lokalen Puffer 712 gespeichert sind, geholt werden und über die Datenverbindung 701c der Speichereinrichtung 200 zugeführt werden können. Die Speichereinrichtung 200 besteht, wie obenstehend erläutert, aus einer Speicherprozessoreinheit 201 und einem Speichermedium 202. Die Speicherprozessoreinheit 201 erhält von der Server-Detektoreinheit 708 ferner über eine weitere Datenverbindung 701d ein "ping"-Signal.

Es sei darauf hingewiesen, dass das Datenkollektormodul 301 sowie interne Komponenten davon als Softwareeinheiten ausgebildet sein können. Wenn eine derartige Konfiguration auf einer Rechnereinheit implementiert wird, wird eine Dienstefunktion ebenso implementiert, und läuft im Hintergrund, wenn das Konfigurationswerkzeug gestartet wird.

Die Daten werden innerhalb des Datenkollektormoduls 301, genauer in dem Datenpuffer 711 oder dem lokalen Puffer 712 so lange gespeichert, bis die Server-Detektoreinheit 708 eine gültige Ethernetverbindung mit einer Speichereinrichtung bzw. Dienste-Datenbank eingerichtet hat. In diesem Fall werden die Daten über den Daten-Gateway 710 zu der Datenbank über einen E-Mail-Dienst oder einen Web-Dienst übertragen.

Im Einzelnen weisen die in dem Datenkollektormodul 301 angeordneten, vorzugsweise als Software-Module ausgebildeten Einheiten die folgenden Funktionen auf:
die Dienste-Ankündigungseinheit 704 überprüft die Verfügbarkeit einer Konfigurationseinheit;
der Datenkollektor 705 übernimmt ein Holen von relevanten Daten von der Konfigurationseinheit;
die Server-Detektoreinheit 708 überprüft die Verfügbarkeit eines Datenziels, d. h. eines Servers, wie beispielsweise der Speichereinrichtung 200;
der Datenpuffer 711 ist ein lokaler Puffer für aufgenommene Daten;
der Daten-Gateway 710 sendet Daten an einen bestimmten Ort, in diesem bevorzugten Ausführungsbeispiel zu der Speichereinrichtung 200.

Ein Datenfluss zwischen den einzelnen Modulen ist durch die Bezugszeichen 1, 2, 3, 4, 5, 6, 7, a, b, c, d und e innerhalb des Datenkollektormoduls 301 gekennzeichnet.

Hierbei dienen die bezeichneten Datenflüsse im Wesentlichen den folgenden Funktionen:
1: eine neue Schutzeinheit wird erfasst;
2: eine spezifische Einheit wird aufgerufen, Daten aufzunehmen;
3: Daten werden von der Schutzeinheit angefordert;
4: Angeforderte Daten werden gesendet;
5, 6, 7: Daten werden gepuffert;
a: Überprüfung einer Server-Verfügbarkeit;
b: Server abgetrennt;
c, d: Holen von gepufferten Daten; und
e: Daten gesendet.

Es sei darauf hingewiesen, dass die Datenflüsse, die mit den Bezugszeichen a, b, c, d und e bezeichnet sind, parallel zu denjenigen Datenflüssen durchgeführt werden, die mit den Bezugszeichen 1, 2, 3, 4, 5, 6 und 7 bezeichnet sind.

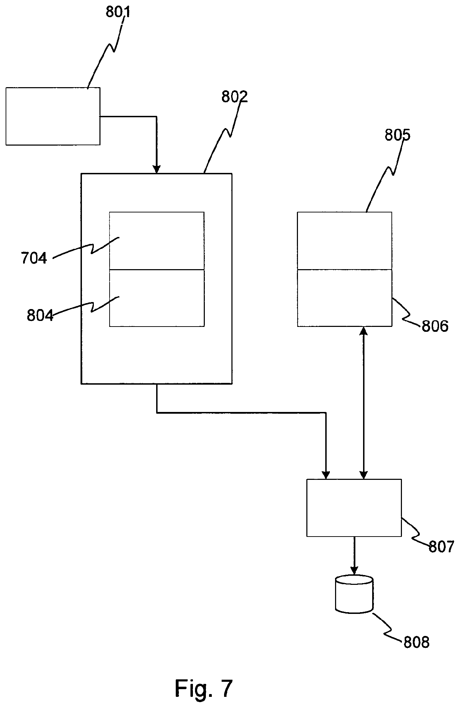

Figur 7 ist ein Flussdiagramm zur Veranschaulichung der Datenbankfunktion. Eine Web-Dienst-Bereitstellungseinheit 801 liefert Daten zu einer Datenverarbeitungseinrichtung 802, welche im Wesentlichen aus einer Datenvalidierungseinheit 803 und einer Datentransformationseinheit 804 besteht. Die Datenverarbeitungseinrichtung 802 ist mit einer Datenzugriffsschicht 807 verbunden. Die Datenzugriffsschicht 807 kann ferner auf eine SQL-Servereinheit 808 zugreifen. Weiterhin ist es möglich, über eine grafische

Benutzerschnittstelleneinheit 805 eine Dateneingabe vorzunehmen, wobei die eingegebenen Daten in einer nachgeschalteten Datenanalyseeinheit 806 analysiert werden. Die grafische Benutzerschnittstelleneinheit 805/die Datenanalyseeinheit 806 sind über eine bidirektionale Verbindung mit der Datenzugriffsschicht 807 verbunden. Die SQL-Servereinheit 808 kann über die Datenzugriffsschicht 807 in einer weiteren Datenbank (in Figur 7 nicht gezeigt) repliziert werden. Durch diese Anordnung von zwei Datenbanken ist eine erhöhte Sicherheit möglich, da die weitere Datenbank als eine Sicherungsdatenbank wirkt und nicht exponiert zu einem öffentlichen Netzwerk installiert werden kann. Die grafische Benutzerschnittstelleneinheit 805/die Datenanalyseeinheit 806 sind dann dort angeschlossen.

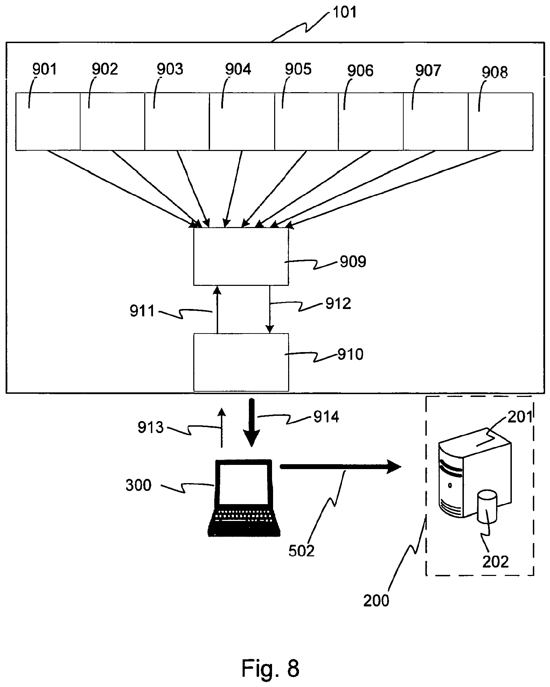

Figur 8 zeigt eine elektronische Einrichtung 101 im Hinblick auf eine automatische Erfassung von installierten Komponenten in einer elektronischen Einrichtung, IED 101 und einer Übertragung von Produktions- und Produktdaten detaillierter. Ferner zeigt Figur 8 die Speichereinrichtung 200, die die Speicherprozessoreinheit 201 und das Speichermedium 202 enthält. Die Konfigurationseinrichtung 300 verknüpft wiederum die elektronische Einrichtung 101 mit der Speichereinrichtung 200.

Zu diesem Zweck besteht zwischen der elektronischen Einrichtung 101 und der Konfigurationseinrichtung 300 eine Datenaustauschmöglichkeit, d. h. es werden der Konfigurationseinrichtung 300 von der elektronischen Einrichtung 101 Informationsantwortdaten 914 im Ansprechen auf Informationsanforderungsdaten 913 zugeführt, welche die Konfigurationseinrichtung 300 zu der elektronischen Einrichtung 101 sendet. Die Konfigurationseinrichtung 300 übergibt dann die relevanten Daten über die installierten Komponenten in der elektronischen Einrichtung 101 an die Speichereinrichtung 200, sobald eine Datenverbindung besteht. Die Speicherprozessoreinheit 201 der Speichereinrichtung 200 stellt eine Speicherung der zu speichernden Daten in dem Speichermedium 202 bereit.

Im Folgenden wird detaillierter auf eine Erfassung von installierten Komponenten in einer elektronischen Einrichtung 101 eingegangen. In einer elektronischen Einrichtung treten Änderungen in Anforderungen, installierten Komponenten und Konfigurationen auf einer kontinuierlichen Basis auf, derart, dass es äußerst fehleranfällig und schwierig wird, diese Änderungen zu verfolgen. Um diese Aufgabe zu lösen, stellt die Erfindung eine automatische Erfassung von installierten Komponenten bereit, wobei derartige Komponenten Hardwarekomponenten, Softwarekomponenten und Konfigurationseinheiten umfassen können.

Die elektronische Einrichtung 101 weist eine Informationsaufnahmeeinheit 909 zur Aufnahme der Information über die installierten Komponenten und eine Kommunikationseinheit 910 zur Kommunikation nach außerhalb der elektronischen Einrichtung 101 auf. Die Kommunikationseinheit 910 tauscht mit der externen Konfigurationseinrichtung 300 die oben erwähnten Signale, d. h. Informationsanforderungsdaten 913 und Informationsantwortdaten 914 aus.

Von der Kommunikationseinheit 910 werden Informationssignaldaten 911 zu der Informationsaufnahmeeinheit 909 gesendet, woraufhin die Informationsaufnahmeeinheit 909 ein Informationsantwortsignal 912 zu der Kommunikationseinheit 910 übermitteln kann. Im Einzelnen umfassen die Informationen über die in der elektronischen Einrichtung 101 installierten Komponenten die folgenden (es sei darauf hingewiesen, dass die Erfindung nicht auf dieses bevorzugte Ausführungsbeispiel beschränkt ist, sondern dass weitere Informationen über installierte Komponenten bereitgestellt werden können):
eine Basisinformation 901, die beispielsweise eine Teilnahme der elektronischen Einrichtung IED 101, eine Version der übertragenen Datenformatstrukturen, eine Seriennummer der elektronischen Einrichtung IED 101, etc. umfasst;
eine Verwaltungsinformation 902, die beispielsweise den Projektnamen für die elektronische Einrichtung 101, die von dem Kunden vergeben wird, den Namen der elektronischen Einrichtung 101, eine Postadresse, wo sich die elektronische Einrichtung 101 befindet, etc. umfasst;
eine Firmware/Software-Information 903, die eine Information über eine Firmware, d. h. eine Hardwarekomponente, so sich die Firmware befindet, eine Firmware/Revision, Revisionsdaten, etc. umfasst;
eine Hardwareinformation 904, die eine Information über den Typ einer Komponente, einen Versionstext, einen Ort oder Schlitz, wo sie sich befindet, eine Seriennummer, ein Herstellungsdaten, etc. umfasst;
eine Anwendungsbeschreibung 905, die eine Information über Anwendungen, wie einen Dateinamen der Anwendung/der Anwendungen, ein Datum der letzten Dateiänderung, ein Datum des letzten Herunterladens, etc. umfasst;
eine Anwendungsinformation 906, die eine Information über installierte Anwendungen enthält;
eine Standortinformation 907 mit einer Information über eine aktuelle Postadresse; und
sonstige Informationen 908.

Ein Datenfluss zwischen den beschriebenen Softwarekomponenten kann wie folgt zusammengefasst werden: eine Rechnereinheit fordert Daten an; ein Kommunikationsteil erfasst die Anforderung und fordert IED-Informationen über die elektronische Einrichtung 101 an; ein Aufnahmeteil nimmt sämtliche angeforderte Information aus den unterschiedlichen Quellen in ein gegebenes strukturiertes Datenformat, wie beispielsweise XML auf; aufgenommene Informationen werden zu dem Kommunikationsteil, d. h. der Kommunikationseinheit 910 gesendet und die angeforderte Information wird übertragen.

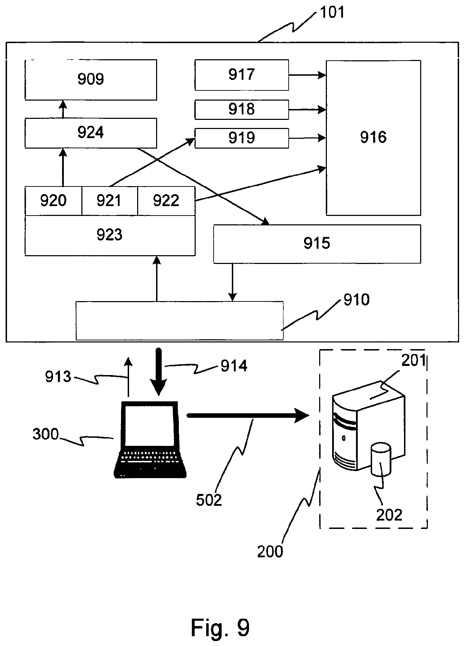

Figur 9 veranschaulicht ein Protokoll für einen Produktdatenaustausch. In Figur 9 ist ein derartiges Protokoll innerhalb der elektronischen Einrichtung 101 detaillierter gezeigt. Die außerhalb der elektronischen Einrichtung 101 angeordneten Komponenten entsprechen jenen der Figur 8 und wurden obenstehend beschrieben. Hierbei dient wiederum die Kommunikationseinheit 910 einem Datenaustausch mit der extern angeordneten Konfigurationseinrichtung 300 in Form von Informationsantwortdaten 914 und Informationsanforderungsdaten 913.

Nach einem Zuführen der Informationsanforderungsdaten 913 über die Kommunikationseinheiten 910 werden diese als eingehende Befehle "geparst", d. h. in einen Datenanforderungsbefehl 920, einen Startbefehl 921 und einen Stoppbefehl 922 zergliedert. Der nächste Schritt erfolgt in einer Informationsaufnahme- und Formateinheit 924 und einer Informationsaufnahmeeinheit 909. Ferner weist das Protokoll für einen Produktdatenaustausch in der elektronischen Einrichtung 101 eine Sequenzeinheit 916 auf welche Informationen über eine neue Netzverbindung 917, über eine Änderung einer Konfiguration 918 und einen Startbefehl 919, welcher von der Einheit 921 zugeführt wird, erhält. Der Sequenzeinheit 916 nachgeschaltet ist eine Sendeeinheit 915, die mit der Kommunikationseinheit 910 verbunden ist, zum Aussenden von Daten zu der Konfigurationseinrichtung 300.

Durch die vorliegende Erfindung ist es somit möglich, eine Datenaufnahmevorrichtung und ein entsprechendes Datenaufnahmeverfahren bereitzustellen, bei welchen die Erkennung von installierten elektronischen Einrichtungen automatisch ermöglicht wird, wobei für den Hersteller wichtige Produktions- und Produktdaten erfasst werden. In zweckmäßiger Weise werden ein Wartungsbetrieb und eine Konfiguration von zu überwachenden elektronischen Einrichtungen effizient ermöglicht.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

### BEZUGSZEICHENLISTE

### Bezugszeichenliste

In den Figuren bezeichnen gleiche Bezugszeichen gleiche oder funktionsgleiche Komponenten oder Schritte.
- 100: Datenaufnahmevorrichtung
- 101, 101a-101n: Elektronische Einrichtung, IED
- 102, 102a-102n: Datenkollektoreinrichtung
- 200: Speichereinrichtung
- 201: Speicherprozessoreinheit
- 202: Speichermedium
- 300, 300a-300n: Konfigurationseinrichtung
- 301: Datenkollektormodul
- 301a: Ankündigungs-Diensteeinheit
- 400, 400a-400n: Datenübertragungseinrichtung
- 401, 401a-401n: ungeschützter Datenübertragungspfad
- 402: geschützter Datenübertragungspfad
- 501a-501n: Produktions- und Produktdaten
- 502, 502a-502n: Übertragungsdaten
- 601: Benutzeridentifikationsdaten
- 602: Kenndaten der elektronischen Einrichtung
- 603: Passwort
- 604: Passwortdaten
- 701: Direkte Datenverbindung
- 702: Datenanforderungssignal
- 703: Datentypsignal
- 704: Dienste-Ankündigungseinheit
- 705: Datenkollektor
- 706: Erstes Anforderungssignal
- 707: Anschlusseinheit
- 708: Server-Detektoreinheit
- 709: Zweites Anforderungssignal
- 710: Daten-Gateway
- 711: Datenpuffer
- 712: Lokaler Puffer
- 713: Holsignal
- 801: Webdienst-Bereitstellungseinheit
- 802: Datenverarbeitungseinrichtung
- 803: Datenvalidierungseinheit
- 804: Datentransformationseinheit
- 805: Graphische Benutzerschnittstelleneinheit
- 806: Datenanalyseeinheit
- 807: Datenzugriffsschicht
- 808: SQL-Servereinheit
- 901: Basisinformation
- 902: Verwaltungsinformation
- 903: Firmware/Softwareinformation
- 904: Hardwareinformation
- 905: Anwendungsbeschreibung
- 906: Anwendungsinformation
- 907: Standortinformation
- 908: Sonstige Information
- 909: Informationsaufnahmeeinheit
- 910: Kommunikationseinheit
- 911: Informationssignal
- 912: Informationsantwortsignal
- 913: Informationsanforderungsdaten
- 914: Informationsantwortdaten
- 915: Sendeeinheit
- 916: Sequenzereinheit
- 917: Neue Netzverbindung
- 918: Konfiguration geändert
- 919: Startbefehl
- 920: Datenanforderung
- 921: Start
- 922: Stopp
- 923: Parsen von eingehenden Befehlen
- 924: Informationsaufnahme- und Formateinheit

## Patentansprüche

1. Datenaufnahmeverfahren zum Aufnehmen von aus mindestens einer intelligenten elektronischen Einrichtung (101, 101a-101n) ausgegebenen Produktions- und Produktdaten (501a-501n), wobei die intelligente elektronische Einrichtung (101, 101a-101n) eine sekundäre Einrichtung einer elektrischen Schaltanlage der Mittel- oder Hochspannung ist, mit den folgenden Schritten:
a) Empfangen der aus der intelligenten elektronischen Einrichtung (101, 101a-101n) ausgegebenen Produktions- und Produktdaten (501a-501n) mittels mindestens einer der intelligenten elektronischen Einrichtung (101, 101a-101n) zugeordneten Datenkollektoreinrichtung (102, 102a-102n);
b) Verarbeiten der empfangenen Produktions- und Produktdaten (501a-501n) in zu übertragende Übertragungsdaten (502, 502a-502n) mittels der Datenkollektoreinrichtung (102, 102a-102n);
c) Ausgeben der Übertragungsdaten (502, 502a-502n) aus der Datenkollektoreinrichtung (102, 102a-102n);
d) Übertragen der von der Datenkollektoreinrichtung (102, 102a-102n) ausgegebenen Übertragungsdaten (502, 502a-502n) zu einer entfernten Speichereinrichtung (200) mittels mindestens einer Datenübertragungseinrichtung (400a-400n); und
e) Speichern der zu der Speichereinrichtung (200) übertragenen Übertragungsdaten (502a-502n) in der Speichereinrichtung (200), wobei eine Speicherung der mittels der Datenübertragungseinrichtung (400a-400n) übertragenen Übertragungsdaten (502a-502n) mittels einer zwischen die Datenkollektoreinrichtung (102, 102a-102n) und die Speichereinrichtung (200) geschalteten Konfigurationseinrichtung (300) gesteuert wird, wobei, bevor die Konfigurationseinrichtung (300) die Übertragungsdaten (502a-502n) empfängt, ein erster Datenübertragungspfad (401, 401a-401n) der Datenübertragungseinrichtung (400a-400n) zwischen der Datenkollektoreinrichtung (102, 102a-102n) und der Konfigurationseinrichtung (300) hergestellt wird und nach dem Übertragen der Übertragungsdaten (502, 502a-502n) an die Konfigurationseinrichtung (300) der erste Datenübertragungspfad (401, 401a-401n) getrennt wird, und, bevor die Übertragungsdaten (502, 502a-502n) an die Speichereinrichtung (200) übermittelt werden, ein zweiter Datenübertragungspfad (402, 402a-402n) der Datenübertragungseinrichtung (400a-400n) zwischen der Konfigurationseinrichtung (300) und der Speichereinrichtung (200) hergestellt wird, und
wobei die Konfigurationseinrichtung (300) aufweist:
einen Datenkollektor (301), der für eine bidirektionale Verbindung mit der Datenkollektoreinrichtunq (102, 102a-102n) konfiguriert ist, über die die Übertragungsdaten (502, 502a-502n) auf ein von dem Datenkollektor (301) der Konfigurationseinrichtung (300) an die Datenkollektoreinrichtung (102, 102a-102n) übertragenes Datenanforderungssignals (702) hin übertragen werden, und
eine Ankündigungs-Diensteinheit (301a), die für eine unidirektionale Verbindung mit der Datenkollektoreinrichtung (102, 102a-102n) konfiguriert ist, über die ein Datentypsignal (703) von der Datenkollektoreinrichtung (102) zu der Ankündigungs-Diensteinheit (301a) übertragbar ist,
wobei die Ankündigungs-Diensteinheit (301a) konfiguriert ist, das Datentypsignal (703) dem Datenkollektor (301) der Konfigurationseinrichtung (300) zuzuführen.

2. Verfahren nach Anspruch 1, **dadurch gekennzeichnet, dass** die intelligente Elektronische Einrichtung (101, 101a-101n) ein Element oder mehrere Elemente der folgenden Liste umfasst: analoge Eingabeeinheiten, Sensoreinheiten, I/O-Schnittstelleneinheiten, Energieversorgungseinheiten und Prozessoreinheiten.

3. Verfahren nach Anspruch 1 oder 2, **dadurch gekennzeichnet, dass** die Produktions- und Produktdaten (501a-501n) die Konfiguration der intelligenten elektronischen Einrichtung (101, 101a-101n) beschreiben und ein Element oder mehrere Elemente der folgenden Liste umfassen: Seriennummer, Herstellungsland, Hardware-Versionsnummer, Software- und/oder Firmware-Versionsnummer, verwendete Testdaten, Gesamtlaufzeit, Standort Prozessorseriennummer und MAC-Adresse.

4. Verfahren nach einem der Ansprüche 1 bis 3, **dadurch gekennzeichnet, dass** der erste Datenübertragungspfad (401, 401a-401n) und der zweite Datenübertragungspfad (402, 402a-402n) lediglich temporär bestehen.

5. Verfahren nach einem der Ansprüche 1 bis 4, **dadurch gekennzeichnet, dass** der erste Datenübertragungspfad (401, 401a-401n) getrennt wird bevor der zweite Datenübertragungspfad (402, 402a-402n) aufgebaut wird.

6. Verfahren nach einem der Ansprüche 1 bis 5, **dadurch gekennzeichnet, dass** der erste Datenübertragungspfad (401,401a-401n) durch ein Datenübertragungskabel ausgebildet ist, welches vor der Übertragung der Übertragungsdaten (502, 502a-502n) an die Datenkollektoreinrichtung (102a-102n) und/oder an die Konfigurationseinrichtung (300) angeschlossen wird und nach dem Übertragen der Übertragungsdaten (502a-502n) von der Datenkollektoreinrichtung (102a-102n) und/oder der Konfigurationseinrichtung (300) getrennt wird.

7. Verfahren nach einem der Ansprüche 1 bis 5, **dadurch gekennzeichnet, dass** der erste Datenübertragungspfad (401, 401a-401n) durch eine drahtlose Datenübertragungsverbindung ausgebildet ist, wobei die Konfigurationseinrichtung (300) vor dem Aufbau des ersten Datenübertragungspfades in Übertragungsreichweite zur Datenkollektoreinrichtung (102, 102a-102n) gebracht wird und nach der Übertragung der Übertragungsdaten die Konfigurationseinrichtung (300) ausser Übertragungsreichweite zur Datenkollektoreinrichtung (102, 102a-102n) gebracht wird.

8. Verfahren nach einem der Ansprüche 1 bis 7, **dadurch gekennzeichnet, dass** der zweite Datenübertragungspfad (402, 402a-402n) mittels einer GSM- und/oder einer Internet-Verbindung bereitgestellt ist, und dass der zweite Datenübertragungspfad (402, 402a-402n) insbesondere ein geschützter Datenübertragungspfad ist.

9. Verfahren nach einem der Ansprüche 1 bis 8, **dadurch gekennzeichnet, dass** die Konfigurationseinrichtung (300) eine portable Rechnereinrichtung (300) ist, insbesondere ein Notebook oder ein Laptop.

10. Verfahren nach einem der Ansprüche 1 bis 9, **dadurch gekennzeichnet, dass** die Übertragungsdaten (502a-502n) bei einem Anschluss der Datenkollektoreinrichtung (102, 102a-102n) an die Konfigurationseinrichtung (300) in der Konfigurationseinrichtung (300) automatisch zwischengespeichert werden.

11. Verfahren nach einem der Ansprüche 1 bis 10, **dadurch gekennzeichnet, dass** bei einem Verbinden der intelligenten elektronischen Einrichtung (101a-101n) mit der mindestens einen Datenübertragungseinrichtung (400a-400n) ein automatisches Ausgeben der Produktions- und Produktdaten (501a-501n) mittels der mindestens einen der intelligenten elektronischen Einrichtung (101a-101n) zugeordneten Datenkollektoreinrichtung (102a-102n) initiiert wird.

12. Verfahren nach einem der Ansprüche 1 bis 11, **dadurch gekennzeichnet, dass** die mit der Konfigurationseinrichtung (300) durchgeführte Steuerung der Speicherung der über die Datenübertragungseinrichtung (400a-400n) übertragenen Übertragungsdaten (502a-502n) die folgenden Schritte umfasst:
a) Eingeben (S1) von Benutzeridentifikationsdaten (601) eines Benutzers in die Konfigurationseinrichtung (300);
b) Erfassen (S2) von Kenndaten (602) der Konfigurationseinrichtung (300);
c) Registrieren (S3) des Benutzers in der Konfigurationseinrichtung (300) mittels Benutzeridentifikationsdaten (601);
d) Übertragen (S3a) der Benutzeridentifikationsdaten (601) und der Kenndaten (602) der Konfigurationseinrichtung (300) von der Konfigurationseinrichtung (300) zu der Speichereinrichtung (200);
e) Registrieren (S4) des Benutzers in der Speichereinrichtung (200) mittels der Benutzeridentifikationsdaten (601), wobei von den Benutzeridentifikationsdaten (601) abhängige Passwortdaten (604) erzeugt werden;
f) Übertragen (S5a) der von den Benutzeridentifikationsdaten (601) abhängigen Passwortdaten (604) von der Speichereinrichtung (200) zu der Konfigurationseinrichtung (300); und
g) Speichern (S5) der Benutzeridentifikationsdaten (601) und/oder der von den Benutzeridentifikationsdaten (601) abhängigen Passwortdaten (604) in der Konfigurationseinrichtung (300).

13. Verfahren nach einem der Ansprüche 1 bis 12, **dadurch gekennzeichnet, dass** die Übertragungsdaten (502a-502n) verschlüsselt und / oder authentifiziert werden.

14. Verfahren nach einem der Ansprüche 1 bis 13, **dadurch gekennzeichnet, dass** bei einem Registrieren (S3) des Benutzers in der Konfigurationseinrichtung (300) ein Benutzername und ein Benutzerpasswort in der Konfigurationseinrichtung (300) dauerhaft gespeichert werden.

15. Verfahren nach einem der Ansprüche 1 bis 14, **dadurch gekennzeichnet, dass** die von den Benutzeridentifikationsdaten (601) abhängigen Passwortdaten (604) durch ein im Vergleich zu den Benutzeridentifikationsdaten (601) langes Datenwort gebildet werden.

16. Datenaufnahmevorrichtung (100) zur Aufnahme von aus mindestens einer intelligenten elektronischen Einrichtung (101a-101n) ausgegebenen Produktions und Produktdaten (501a-501n), insbesondere zur Durchführung des Verfahrens nach einem der Ansprüche 1 bis 15, wobei die intelligente ektronische Einrichtung (101, 101a-101n) eine sekundäre Einrichtungen einer elektrischer Schaltanlagen der Mittel- oder Hochspannung ist, mit:
a) mindestens einer der intelligenten elektronischen Einrichtung (101a-101n) zugeordneten Datenkollektoreinrichtung (102a-102n), die die aus der intelligenten elektronischen Einrichtung (101a-101n) ausgegebenen Produktions- und Produktdaten (501a-501n) aufnimmt und die diese in zu übertragende Übertragungsdaten (502a-502n) umsetzt;
b) einer entfernten Speichereinrichtung (200) zur Speicherung der mittels der mindestens einen Datenkollektoreinrichtung (102a-102n) bereitgestellten Übertragungsdaten (502); und
c) einer Datenübertragungseinrichtung (400a-400n) zur Übertragung der Übertragungsdaten (502a-502n) von der Datenkollektoreinrichtung (102a-102n) zu der Speichereinrichtung (200), **dadurch gekennzeichnet, dass** die Datenaufnahmevorrichtung (100) ferner aufweist:
eine zwischen die Datenkollektoreinrichtung (102a-102n) und die Speichereinrichtung (200) geschaltete Konfigurationseinrichtung (300) zur Steuerung der Speicherung der von der Datenkollektoreinrichtung (102a-102n) bereitgestellten Übertragungsdaten (502), wobei die Konfigurationseinrichtung (300) eine portable Rechnereinrichtung (300) ist, insbesondere ein Notebook oder ein Laptop, wobei der erste Datenübertragungspfad (401,401a-401n) nicht gleichzeitig mit dem zweiten Datenübertragungspfad (402, 402a-402n) besteht, wobei die Konfigurationseinrichtung (300) aufweist:
einen Datenkollektor (301), der für eine bidirektionale Verbindung mit der Datenkollektoreinrichtung (102, 102a-102n) konfiguriert ist, über die die Übertragungsdaten (502, 502a-502n) auf ein von dem Datenkollektor (301) der Konfigurationseinrichtung (300) an die Datenkollektoreinrichtung (102, 102a-102n) übertragenes Datenanforderungssignals (702) hin übertragen werden, und
eine Ankündigungs-Diensteinheit (301a), die für eine unidirektionale Verbindung mit der Datenkollektoreinrichtung (102, 102a-102n) konfiguriert ist, über die ein Datentypsignal (703) von der Datenkollektoreinrichtung (102) zu der Ankündigungs-Diensteinheit (301a) übertragbar ist,
wobei die Ankündigungs-Diensteinheit (301a) konfiguriert ist, das Datentypsignal (703) dem Datenkollektor (301) der Konfigurationseinrichtung (300) zuzuführen.

17. Datenaufnahmevorrichtung (100) gemäss Anspruch 16, **dadurch gekennzeichnet, dass** die intelligente Elektronische Einrichtung (101, 101a-101n) ein Element oder mehrere Elemente der folgenden Liste umfasst: analoge Eingabeeinheiten, Sensoreinheiten, I/O-Schnittstelleneinheiten, Energieversorgungseinheiten und Prozessoreinheiten.

18. Datenaufnahmevorrichtung (100) nach Anspruch 16 oder 17, **dadurch gekennzeichnet, dass** die Produktions- und Produktdaten (501a-501n) die Konfiguration der intelligenten elektronischen Einrichtung (101, 101a-101n) beschreiben und ein Element oder mehrere Elemente der folgenden Liste umfassen:
Seriennummer, Herstellungsland, Hardware-Versionsnummer, Software- und/oder Firmware-Versionsnummer, verwendete Testdaten, Gesamtlaufzeit, Standort Prozessorseriennummer und MAC-Adresse.

## Claims

1. Data recording method for recording production and product data (501a-501n), output from at least one intelligent electronic device (101, 101a-101n), wherein the intelligent electronic device (101, 101a-101n) is a secondary device of a medium- or high-voltage electrical switchgear installation, comprising the following steps:
a) receiving the production and product data (501a-501n), output from the intelligent electronic device (101, 101a-101n) by means of at least one data collector device (102, 102a-102n) assigned to the intelligent electronic device (101, 101a-101n);
b) processing the received production and product data (501a-501n) into transmission data (502, 502a-502n) to be transmitted by means of the data collector device (102, 102a-102n);
c) outputting the transmission data (502, 502a-502n) from the data collector device (102, 102a-102n);
d) transmitting the transmission data (502, 502a-502n), output by the data collector device (102, 102a-102n) to a remote storage device (200) by means of at least one data transmission device (400a-400n); and
e) storing the transmission data (502a-502n), transmitted to the storage device (200) in the storage device (200), wherein a storage of the transmission data (502a-502n), transmitted by means of the data transmission device (400a-400n) is controlled by means of a configuration device (300), connected between the data collector device (102, 102a-102n) and the storage device (200), wherein, before the configuration device (300) receives the transmission data (502a-502n), a first data transmission path (401, 401a-401n) of the data transmission device (400a-400n) is produced between the data collector device (102, 102a-102n) and the configuration device (300) and, after the transmitting of the transmission data (502, 502a-502n) to the configuration device (300), the first data transmission path (401, 401a-401n) is disconnected, and, before the transmission data (502, 502a-502n) are communicated to the storage device (200), a second data transmission path (402, 402a-402n) of the data transmission device (400a-400n) is produced between the configuration device (300) and the storage device (200), and wherein the configuration device (300) has:
a data collector (301) configured for a bidirectional link to the data collector device (102, 102a-102n), via which the transmission data (502, 502a-502n) are transmitted in response to a data request signal (702) transmitted from the data collector (301) of the configuration device (300) to the data collector device (102, 102a-102n), and
a notification service unit (301a) configured for a unidirectional link to the data collector device (102, 102a-102n), via which a data type signal (703) can be transmitted from the data collector device (102) to the notification service unit (301a),
wherein the notification service unit (301a) is configured to feed the data type signal (703) to the data collector (301) of the configuration device (300).

2. Method according to Claim 1, **characterized in that** the intelligent electronic device (101, 101a-101n) comprises one element or a plurality of elements from the following list: analog input units, sensor units, I/O interface units, power supply units and processor units.

3. Method according to Claim 1 or 2, **characterized in that** the production and product data (501a-501n) describe the configuration of the intelligent electronic device (101, 101a-101n) and comprise one element or a plurality of elements from the following list: serial number, country of production, hardware version number, software and/or firmware version number, used test data, total operating time, location of processor serial number and MAC address.

4. Method according to any of Claims 1 to 3, **characterized in that** the first data transmission path (401, 401a-401n) and the second data transmission path (402, 402a-402n) exist only temporarily.

5. Method according to any of Claims 1 to 4, **characterized in that** the first data transmission path (401, 401a-401n) is disconnected before the second data transmission path (402, 402a-402n) is set up.

6. Method according to any of Claims 1 to 5, **characterized in that** the first data transmission path (401, 401a-401n) is formed by a data transmission cable which is connected to the data collector device (102a-102n) and/or to the configuration device (300) before the transmitting of the transmission data (502, 502a-502n) and is disconnected from the data collector device (102a-102n) and/or the configuration device (300) after the transmission of the transmission data (502a-502n) .

7. Method according to any of Claims 1 to 5, **characterized in that** the first data transmission path (401, 401a-401n) is formed by a wireless data transmission link, wherein the configuration device (300) is brought into transmission range with respect to the data collector device (102, 102a-102n) before the first data transmission path has been set up, and the configuration device (300) is brought out of transmission range with respect to the data collector device (102, 102a-102n) after the transmitting of the transmission data.

8. Method according to any of Claims 1 to 7, **characterized in that** the second data transmission path (402, 402a-402n) is provided by means of a GSM link and/or an Internet link, and **in that** the second data transmission path (402, 402a-402n) is, in particular, a protected data transmission path.

9. Method according to any of Claims 1 to 8, **characterized in that** the configuration device (300) is a portable computer device (300), in particular a notebook or a laptop.

10. Method according to any of Claims 1 to 9, **characterized in that** the transmission data (502a-502n) are automatically buffer-stored in the configuration device (300) when the data collector device (102, 102a-102n) is connected to the configuration device (300).

11. Method according to any of Claims 1 to 10, **characterized in that** when the intelligent electronic device (101a-101n) is connected to the at least one data transmission device (400a-400n), an automatic outputting of the production and product data (501a-501n) is initiated by means of the at least one data collector device (102a-102n) assigned to the intelligent electronic device (101a-101n).

12. Method according to any of Claims 1 to 11, **characterized in that** the control - carried out by means of the configuration device (300) of the storage of the transmission data (502a-502n) transmitted by means of the data transmission device (400a-400n) comprises the following steps:
a) inputting (S1) user identification data (601) of a user into the configuration device (300);
b) acquiring (S2) characteristic data (602) of the configuration device (300);
c) registering (S3) the user in the configuration device (300) by means of user identification data (601) ;
d) transmitting (S3a) the user identification data (601) and the characteristic data (602) of the configuration device (300) from the configuration device (300) to the storage device (200);
e) registering (S4) the user in the storage device (200) by means of the user identification data (601), wherein password data (604), dependent on the user identification data (601), are generated;
f) transmitting (S5a) the password data (604), dependent on the user identification data (601), from the storage device (200) to the configuration device (300); and
g) storing (S5) the user identification data (601) and/or the password data (604) dependent on the user identification data (601) in the configuration device (300) .

13. Method according to any of Claims 1 to 12, **characterized in that** the transmission data (502a-502n) are encrypted and/or authenticated.

14. Method according to any of Claims 1 to 13, **characterized in that** during a registration (S3) of the user in the configuration device (300), a user name and a user password are stored permanently in the configuration device (300).

15. Method according to any of Claims 1 to 14, **characterized in that** the password data (604) dependent on the user identification data (601) are formed by a data word which is long in comparison with the user identification data (601).

16. Data recording apparatus (100) for recording production and product data (501a-501n) output from at least one intelligent electronic device (101a-101n), in particular for carrying out the method according to any of Claims 1 to 15, wherein the intelligent electronic device (101, 101a-101n) is a secondary devices of a medium- or high-voltage electrical switchgear installations, comprising:
a) at least one data collector device (102a-102n) which is assigned to the intelligent electronic device (101a-101n) and which records the production and product data (501a-501n) output from the intelligent electronic device (101a-101n) and which converts said data into transmission data (502a-502n) to be transmitted;
b) a remote storage device (200) for storing the transmission data (502) provided by means of the at least one data collector device (102a-102n); and
c) a data transmission device (400a-400n) for transmitting the transmission data (502a-502n) from the data collector device (102a-102n) to the storage device (200), **characterized in that** the data recording apparatus (100) furthermore has:
a configuration device (300), connected between the data collector device (102a-102n) and the storage device (200), for controlling the storage of the transmission data (502) provided by the data collector device (102a-102n), wherein the configuration device (300) is a portable computer device (300), in particular a notebook or a laptop, wherein the first data transmission path (401, 401a-401n) does not exist simultaneously with the second data transmission path (402, 402a-402n), wherein the configuration device (300) has:
a data collector (301) configured for a bidirectional link to the data collector device (102, 102a-102n), via which the transmission data (502, 502a-502n) are transmitted in response to a data request signal (702) transmitted from the data collector (301) of the configuration device (300) to the data collector device (102, 102a-102n), and
a notification service unit (301a) configured for a unidirectional link to the data collector device (102, 102a-102n), via which a data type signal (703) can be transmitted from the data collector device (102) to the notification service unit (301a),
wherein the notification service unit (301a) is configured to feed the data type signal (703) to the data collector (301) of the configuration device (300).

17. Data recording apparatus (100) according to Claim 16, **characterized in that** the intelligent electronic device (101, 101a-101n) comprises one element or a plurality of elements from the following list: analog input units, sensor units, I/O interface units, power supply units and processor units.

18. Data recording apparatus (100) according to Claim 16 or 17, **characterized in that** the production and product data (501a-501n) describe the configuration of the intelligent electronic device (101, 101a-101n) and comprise one element or a plurality of elements from the following list: serial number, country of production, hardware version number, software and/or firmware version number, used test data, total operating time, location of processor serial number and MAC address.

## Revendications

1. Procédé d'enregistrement de données pour enregistrer des données de production et des données de produits (501a-501n) fournies en sortie par au moins un moyen électronique intelligent (101, 101a-101n), dans lequel le moyen électronique intelligent (101, 101a-101n) est un moyen secondaire d'un appareillage de commutation électrique à moyenne ou haute tension, comprenant les étapes suivantes :
a) recevoir les données de production et de produits (501a-501n) fournies en sortie par le moyen électronique intelligent (101, 101a-101n) au moyen d'au moins un moyen collecteur de données (102, 102a-102n) associé au moyen électronique intelligent (101, 101a-101n) ;
b) transformer les données de production et de produits reçues (501a-501n) en données de transmission (502, 502a-502n) devant être transmises par le moyen collecteur de données (102, 102a-102n) ;
c) fournir en sortie les données de transmission (502, 502a-502n) à partir du moyen collecteur de données (102, 102a-102n) ;
d) transmettre les données de transmission (502, 502a-502n) fournies en sortie par le moyen collecteur de données (102, 102a-102n) à un moyen de stockage distant (200) au moyen d'au moins un moyen de transmission de données (400a-400n) ; et
e) stocker les données de transmission (502a-502n) transmises au moyen de stockage (200) dans le moyen de stockage (200), dans lequel le stockage des données de transmission (502a-502n) transmises par le moyen de transmission de données (400a-400n) est commandé par un moyen de configuration (300) connecté entre le moyen collecteur de données (102, 102a-102n) et le moyen de stockage (200), dans lequel, avant que le moyen de configuration (300) ne reçoive les données de transmission (502a-502n), un premier trajet de transmission de données (401, 401a-401n) du moyen de transmission de données (400a-400n) est établi entre le moyen collecteur de données (102, 102a-102n) et le moyen de configuration (300) et le premier trajet de transmission de données (401, 401a-401n) est déconnecté après la transmission des données de transmission (502, 502a-502n) au moyen de configuration (300) et, avant que les données de transmission (502, 502a-502n) ne soient transmises au moyen de stockage (200), un second trajet de transmission de données (402, 402a-402n) du moyen de transmission de données (400a-400n) est établi entre le moyen de configuration (300) et le moyen de stockage (200), et dans lequel le moyen de configuration (300) comporte :
un collecteur de données (301) configuré pour une liaison bidirectionnelle au moyen collecteur de données (102, 102a-102n) par l'intermédiaire duquel les données de transmission (502, 502a-502n) sont transmises sur un signal de demande de données (702) transmis du collecteur de données (301) du moyen de configuration (300) au moyen collecteur de données (102, 102a-102n), et
une unité de service d'annonce (301a) configurée pour une liaison unidirectionnelle avec le moyen collecteur de données (102, 102a-102n), par l'intermédiaire de laquelle un signal de type de données (703) peut être transmis du moyen collecteur de données (102) à l'unité de service d'annonce (301a), dans lequel l'unité de service d'annonce (301a) est configurée pour délivrer le signal de type de données (703) au collecteur de données (301) du moyen de configuration (300).

2. Procédé selon la revendication 1, **caractérisé en ce que** le moyen électronique intelligent (101, 101a-101n) comprend un ou plusieurs éléments de la liste suivante : unités d'entrée analogiques, unités de capteurs, unités d'interface I/O, unités d'alimentation et processeurs.

3. Procédé selon la revendication 1 ou 2, **caractérisé en ce que** les données de production et de produits (501a-501n) décrivent la configuration du moyen électronique intelligent (101, 101a-101n) et comprennent un ou plusieurs éléments de la liste suivante : numéro de série, pays de fabrication, numéro de version du matériel, numéro de version du logiciel et/ou du micrologiciel, données de test utilisées, durée d'exécution totale, numéro de série du processeur et adresse MAC.

4. Procédé selon l'une des revendications 1 à 3, **caractérisé en ce que** le premier trajet de transmission de données (401, 401a-401n) et le second trajet de transmission de données (402, 402a-402n) n'existent que temporairement.

5. Procédé selon l'une des revendications 1 à 4, **caractérisé en ce que** le premier trajet de transmission de données (401, 401a-401n) est déconnecté avant que le second trajet de transmission de données (402, 402a-402n) ne soit établi.

6. Procédé selon l'une des revendications 1 à 5, **caractérisé en ce que** le premier trajet de transmission de données (401, 401a-401n) est constitué par un câble de transmission de données qui est connecté au moyen collecteur de données (102a-102n) et/ou au moyen de configuration (300) avant la transmission des données de transmission (502, 502a-502n) et qui est déconnecté du moyen collecteur de données (102a-102n) et/ou du moyen de configuration (300) après la transmission des données de transmission (502a-502n).

7. Procédé selon l'une des revendications 1 à 5, **caractérisé en ce que** le premier trajet de transmission de données (401, 401a-401n) est constitué par une liaison de transmission de données sans fil, dans lequel le moyen de configuration (300) est amené à portée de transmission vers le moyen collecteur de données (102, 102a-102n) avant l'établissement du premier trajet de transmission de données et le moyen de configuration (300) est amené hors de portée de transmission vers le moyen collecteur de données (102, 102a-102n) après la transmission des données de transmission.

8. Procédé selon l'une des revendications 1 à 7, **caractérisé en ce que** le second trajet de transmission de données (402, 402a-402n) est réalisé au moyen d'une liaison GSM et/ou Internet, et **en ce que** le second trajet de transmission de données (402, 402a-402n) est en particulier un trajet de transmission de données protégé.

9. Procédé selon l'une des revendications 1 à 8, **caractérisé en ce que** le moyen de configuration (300) est un dispositif informatique portable (300), en particulier un ordinateur de poche ou un ordinateur portable.

10. Procédé selon l'une des revendications 1 à 9, **caractérisé en ce que** les données de transmission (502a-502n) sont automatiquement mises en mémoire tampon dans le moyen de configuration (300) lorsque le moyen collecteur de données (102, 102a-102n) est connecté au moyen de configuration (300).

11. Procédé selon l'une des revendications 1 à 10, **caractérisé en ce que**, lorsque le moyen électronique intelligent (101a-101n) est connecté audit au moins un dispositif de transmission de données (400a-400n), une fourniture en sortie automatique des données de production et de produits (501a-501n) est déclenchée au moyen dudit au moins un moyen collecteur de données (102a-102n) associé au moyen électronique intelligent (101a-101n) .

12. Procédé selon l'une des revendications 1 à 11, **caractérisé en ce que** la commande du stockage des données de transmission (502a-502n) transmises par l'intermédiaire du dispositif de transmission de données (400a-400n) effectuée à l'aide du moyen de configuration (300) comprend les étapes suivantes :
a) saisir (S1) des données d'identification d'utilisateur (601) d'un utilisateur sur le moyen de configuration (300) ;
b) acquérir (S2) des données caractéristiques (602) du moyen de configuration (300) ;
c) enregistrer (S3) l'utilisateur sur le moyen de configuration (300) au moyen de données d'identification de l'utilisateur (601) ;
d) transmettre (S3a) les données d'identification d'utilisateur (601) et les données caractéristiques (602) du moyen de configuration (300) dudit moyen de configuration (300) au dispositif de stockage (200) ;
e) enregistrer (S4) l'utilisateur sur le dispositif de stockage (200) au moyen des données d'identification d'utilisateur (601), dans lequel des données de mot de passe (604) dépendant des données d'identification d'utilisateur (601) sont générées ;
f) transmettre (S5a) les données de mot de passe (604) dépendant des données d'identification d'utilisateur (601) du moyen de stockage (200) au moyen de configuration (300) ; et
g) stocker (S5) les données d'identification d'utilisateur (601) et/ou les données de mot de passe (604) dépendant des données d'identification d'utilisateur (601) dans le moyen de configuration (300).

13. Procédé selon l'une des revendications 1 à 12, **caractérisé en ce que** les données de transmission (502a-502n) sont cryptées et/ou authentifiées.

14. Procédé selon l'une des revendications 1 à 13, **caractérisé en ce que**, lorsque l'utilisateur s'enregistre (S3) sur le moyen de configuration (300), un nom d'utilisateur et un mot de passe d'utilisateur sont stockés en permanence dans le moyen de configuration (300) .

15. Procédé selon l'une des revendications 1 à 14, **caractérisé en ce que** les données de mot de passe (604) dépendant des données d'identification d'utilisateur (601) sont constituées d'un mot de données long par comparaison aux données d'identification d'utilisateur (601) .

16. Dispositif d'enregistrement de données (100) pour enregistrer des données de production et des données de produits (501a-501n) fournies en sortie par au moins un moyen électronique intelligent (101a-101n), en particulier pour mettre en oeuvre le procédé selon l'une des revendications 1 à 15, dans lequel le moyen électronique intelligent (101, 101a-101n) est un moyens secondaire d'un appareillages électrique de commutation à moyenne ou haute tension, comportant :
a) au moins un moyen collecteur de données (102a-102n) associé au moyen électronique intelligent (101a-101n), qui reçoit les données de production et de produits (501a-501n) fournies en sortie par le moyen électronique intelligent (101a-101n) et les convertit en des données de transmission (502a-5002n) à transmettre ;
b) un moyen de stockage distant (200) pour stocker les données de transmission (502) fournies par ledit au moins un moyen collecteur de données (102a-102n) ; et
c) un moyen de transmission de données (400a-400n) pour transmettre les données de transmission (502a-502n) du moyen collecteur de données (102a-102n) au moyen de stockage (200), **caractérisé en ce que** le moyen d'enregistrement de données (100) comporte en outre :
un moyen de configuration (300) connecté entre le moyen collecteur de données (102a-102n) et le moyen de stockage (200) pour commander le stockage des données de transmission (502) fournies par le moyen collecteur de données (102a-102n), dans lequel le moyen de configuration (300) est un moyen informatique portable (300), en particulier un ordinateur de poche ou un ordinateur portable (300), dans lequel le premier trajet de transmission de données (401, 401a-401n) n'est pas établi en même temps que le second trajet de transmission (402, 402a-402n), dans lequel le moyen de configuration (300) comporte :
un collecteur de données (301) configuré pour une liaison bidirectionnelle avec le moyen collecteur de données (102, 102a-102n), par l'intermédiaire de laquelle les données de transmission (502, 502a-502n) sont transmises sur un signal de demande de données (702) transmis du collecteur de données (301) du moyen de configuration (300) au moyen collecteur de données (102, 102a-102n), et
une unité de service d'annonce (301a) configurée pour une liaison unidirectionnelle avec le moyen collecteur de données (102, 102a-102n), par l'intermédiaire de laquelle un signal de type de données (703) peut être transmis du moyen collecteur de données (102) à l'unité de service d'annonce (301a), dans lequel l'unité de service d'annonce (301a) est configurée pour délivrer le signal de type de données (703) au collecteur de données (301) du moyen de configuration (300).

17. Dispositif de réception de données (100) selon la revendication 16, **caractérisé en ce que** le moyen électronique intelligent (101, 101a-101n) comprend un ou plusieurs éléments de la liste suivante : unités d'entrée analogiques, unités de capteurs, unités d'interface I/O, unités d'alimentation et unités à processeurs.

18. Dispositif d'acquisition de données (100) selon la revendication 16 ou 17, **caractérisé en ce que** les données de production et de produits (501a-501n) décrivent la configuration du moyen électronique intelligent (101, 101a-101n) et comprennent un ou plusieurs éléments de la liste suivante : numéro de série, pays de fabrication, numéro de version du matériel, numéro de version du logiciel et/ou du micrologiciel, données de test utilisées, durée d'exécution totale, numéro de série du processeur et adresse MAC.
